(19) Europäisches Patentamt
European Patent Office
Office européen des brevets

(11) Veröffentlichungsnummer : **0 284 568 B1**

# (12) EUROPÄISCHE PATENTSCHRIFT

(45) Veröffentlichungstag der Patentschrift : **29.01.92 Patentblatt 92/05**

(51) Int. Cl.[5] : **C09B 62/503,** C09B 62/04, C07C 317/26, C07D 295/22, D06P 1/38

(21) Anmeldenummer : **88810183.9**

(22) Anmeldetag : **21.03.88**

## (54) Reaktivfarbstoffe, deren Herstellung und Verwendung.

(30) Priorität : **27.03.87 CH 1182/87**

(43) Veröffentlichungstag der Anmeldung : **28.09.88 Patentblatt 88/39**

(45) Bekanntmachung des Hinweises auf die Patenterteilung : **29.01.92 Patentblatt 92/05**

(84) Benannte Vertragsstaaten : **BE CH DE FR GB IT LI**

(56) Entgegenhaltungen :
**EP-A- 0 182 173**
**EP-A- 0 210 951**
**EP-A- 0 214 093**

(73) Patentinhaber : **CIBA-GEIGY AG**
**Klybeckstrasse 141**
**CH-4002 Basel (CH)**

(72) Erfinder : **Schwander, Hansrudolf, Dr.**
**Unterm Schellenberg 189**
**CH-4125 Riehen (CH)**
Erfinder : **Tzikas, Athanassios, Dr.**
**Muttenzerstrasse 78**
**CH-4133 Pratteln (CH)**
Erfinder : **Aeschlimann, Peter**
**Sandweg 16**
**CH-4123 Allschwil (CH)**

EP 0 284 568 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z.B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffe diesen Anforderungen genügen.

Gegenstand der Erfindung sind Reaktivfarbstoffe der Formel

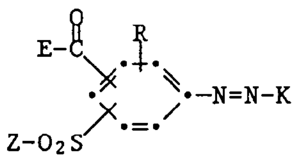

(2)

oder der Formel

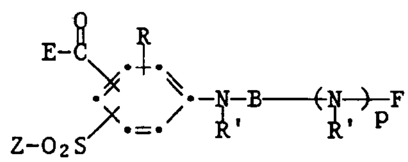

(14)

sowie Metallkomplexe von Farbstoffen der Formel (2), worin R Wasserstoff, Halogen, Hydroxy oder Sulfo ist, Z einen Rest der Formel $-CH=CH_2$ oder $-CH_2-CH_2-Y$ bedeutet, Y einen unter alkalischen Bedingungen abspaltbaren anorganischen oder organischen Rest darstellt, R′ Wasserstoff oder unsubstituiertes oder durch -COOH, -CN, -OH oder $-SO_3H$ substituiertes $C_1$-$C_4$-Alkyl ist, E ein Rest der Formel

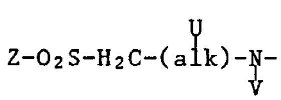

(Ia),

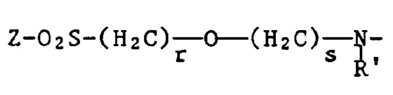

(Ib),

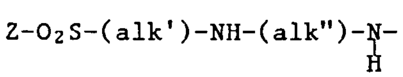

(Ic),

oder

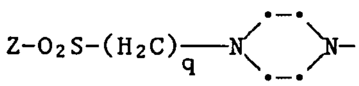 (Id),

ist, worin R′ und Z die oben angegebene Bedeutung haben, alk, alk′ und alk″ unabhängig voneinander einen $C_1$-$C_6$-Alkylenrest darstellen, U für Wasserstoff, Halogen, Hydroxy, Sulfato, $C_1$-$C_4$-Alkanoyloxy, Cyano, Carboxy, $C_1$-$C_4$-Alkoxycarbonyl, Carbamoyl oder einen Rest -$SO_2$-Z, worin Z die oben angegebene Bedeutung hat, steht, V Wasserstoff, gegebenenfalls substituiertes $C_1$-$C_4$-Alkyl oder ein Rest der Formel

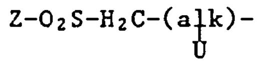 ,

worin Z, alk und U die oben angegebene Bedeutung haben, ist und q, r und s unabhängig voneinander eine ganze Zahl von 1 bis 6 bedeuten,
K der Rest einer Kupplungskomponente der Benzol- oder Naphthalinreihe oder der heterocyclischen Reihe ist,
B ein Brückenglied darstellt,
F der Rest eines mindestens eine -$SO_3$H- Gruppe enthaltenden metallfreien oder metallhaltigen Mono- oder Disazofarbstoffs, der Rest eines 1-Amino- oder 1-Anilinoanthrachinons, der Rest eines Sulfophthalocyaninfarbstoffs oder der Rest eines Formazan-, Phenazin-, Oxazin- oder Nitroarylfarbstoffes ist und p 0 oder 1 bedeutet.

Als ein unter alkalischen Bedingungen abspaltbarer anorganischer oder organischer Rest Y kommt z.B. eine der folgenden anionisch abspaltbaren Gruppen in Betracht:

$-OSO_3H$, $-SSO_3H$, $-OCOCH_3$, $-OPO_3H_2$, $-O-CO-C_6H_5$,

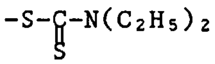 , $-Cl$, $-Br$, $-F$,

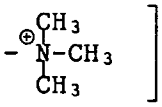 $X^{\ominus}$ (X = Halogen),

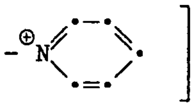 $Cl^{\ominus}$ , $\overset{\oplus}{N}(CH_3)_3$ ] $CH_3SO_4^{\ominus}$

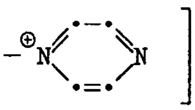 $X^{\ominus}$

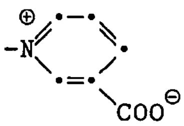 , 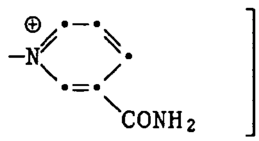 $X^{\ominus}$ (X = Halogen),

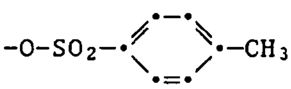 ,

$-O-SO_2-N(CH_3)_2$, 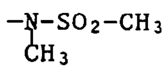 ,

$-O-SO_2-CH_2$, $-S-C\equiv N$,

$-O-SO_2-CH_3$, $-S-C{\equiv}N$,

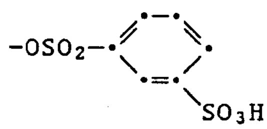 , 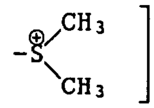 $CH_3SO_4^{\ominus}$ ,

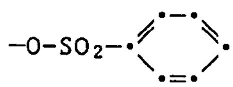 ,

$-OOCCCl_3$ , $-OOCCHCl_2$ , $-OOCCH_2Cl$ ,

$-O-O_2SR$ (R = Alkyl oder Aryl), $-O-SO_2-N(C_2H_5)_2$ ,

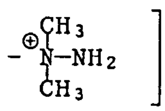 $Cl^{\ominus}$ , 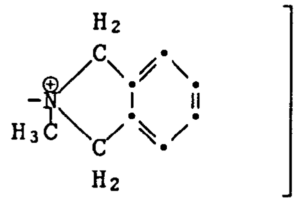 $Cl^{\ominus}$

Vorzugsweise ist Y eine Gruppe $-OSO_3H$, $-SSO_3H$, $OCOCH_3$, $-OPO_3H_2$, -Cl oder $-O-CO-C_6H_5$ und insbesondere bevorzugt ist für Y die Bedeutung $-OSO_3H$.

Die Reste Z in den Formeln (2), (14), (Ia), (Ib), (Ic) und (Id) können verschieden oder, vorzugsweise, gleich sein.

Der Substituent R ist als Halogen z.B. Fluor oder Brom und insbesondere Chlor.

R steht vorzugsweise für Wasserstoff oder Chlor und insbesondere bevorzugt für Wasserstoff.

Beispiele für geeignete Reste R′ sind Wasserstoff, Methyl, Ethyl, n-oder iso-Propyl, n-, sec- oder tert.-Butyl, Carboxymethyl, Sulfomethyl, Cyanethyl oder Hydroxyethyl.

R′ steht vorzugsweise für Methyl und insbesondere bevorzugt für Wasserstoff.

Bei alk, alk′ und alk″ handelt es sich unabhängig voneinander z.B um einen Methylen-, Ethylen- oder um einen geradkettigen oder verzweigten Propylen-, Butylen-, Pentylen- oder Hexylenrest. Vorzugsweise stellen alk, alk′ und alk″ unabhängig voneinander einen geradkettigen $C_1$-$C_4$-Alkylenrest dar.

alk steht besonders bevorzugt für Methylen; alk′ und alk″ bedeuten besonders bevorzugt Ethylen.

U steht vorzugsweise für Wasserstoff, Hydroxy, Sulfato, Acetyloxy, Carboxy, Methoxycarbonyl, Ethoxycarbonyl oder die Gruppe $-SO_2-Z$, wobei Z die zuvor angegebene Bedeutung hat; besonders bevorzugt ist für U die Bedeutung Wasserstoff.

Ist V ein substituierter $C_1$-$C_4$-Alkylrest, so kann dies z.B. ein durch Halogen, Hydroxy, Cyano, Carboxy, Sulfo, Sulfato, $C_1$-$C_4$-Alkoxy oder $C_1$-$C_4$-Alkoxycarbonyl substituierter $C_1$-$C_4$-Alkylrest sein.

Beispiele für substituierte $C_1$-$C_4$-Alkylreste sind: Carboxymethyl, β-Carboxyethyl, Methoxycarbonylmethyl, Ethoxycarbonylmethyl, β-Carboxyethyl, Methoxycarbonylmethyl, Ethoxycarbonylmethyl, β-Methoxyethyl, β-Ethoxyethyl, β-Chlorethyl, γ-Brompropyl, β-Hydroxyethyl, β-Hydroxybutyl, β-Cyanethyl, Sulfomethyl, β-Sulfoethyl, β-Sulfatoethyl.

Steht V für einem Rest der Formel

$$Z-O_2S-H_2C-(\overset{U}{\overset{|}{a l k}})-,$$

so kann sich dieser von dem in Formel (Ia) vorhandenen zweiten Rest

$$Z-O_2S-H_2C-(\overset{U}{\overset{|}{a l k}})-$$

unterscheiden oder, vorzugsweise, mit letzterem übereinstimmen.

V bedeutet vorzugsweise Wasserstoff, Methyl, Ethyl oder die Gruppe

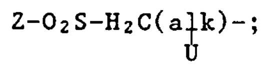

insbesondere bevorzugt ist für V die Bedeutung Wasserstoff.

q, r und s stehen unabhängig voneinander bevorzugt für eine ganze Zahl von 1 bis 4; besonders bevorzugt bedeuten q, r und s jeweils die Zahl 2.

E bedeutet vorzugsweise einen Rest der Formel (Ib) und insbesondere einen Rest der Formel (Ia).

Eine bevorzugte Ausführungsform der Erfindung umfasst Reaktivfarbstoffe der Formel

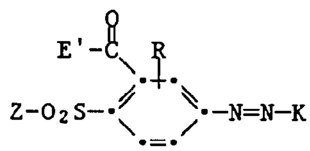

(2a)

oder

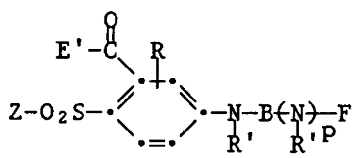

(14a),

worin E′ ein Rest der Formel

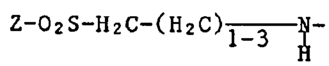

oder

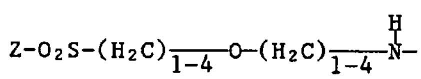

ist und B, F, K, R, R′, Z und p jeweils die zuvor angegebene Bedeutung haben.

Eine insbesondere bevorzugte Ausführungsform der Erfindung umfasst Reaktivfarbstoffe der Formel

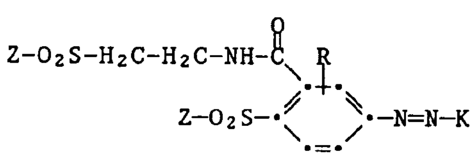

(2b)

oder

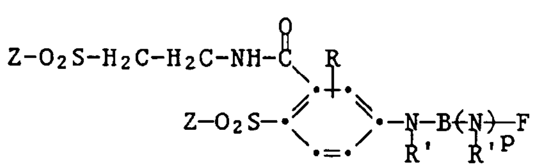

(14b),

worin B, F, K, R, R′, Z undj p jeweils die zuvor angegebene Bedeutung haben.

Der Rest K kann selbst wiederum Azogruppen enthalten, er kann also der Rest einer Azoverbindung, insbesondere einer Monoazoverbindung sein. Sofern K der Rest einer Kupplungskomponente der Benzol- oder Naphthalinreihe ist, stellt K somit vorzugsweise einen Benzol-, Naphthalin-, Naphthylazobenzol- oder Phenylazonaphthalin-Rest dar, der, wie unten angegeben, weitersubstituiert sein kann. Sofern K der Rest einer Kupplungskomponente der heterocyclischen Reihe ist, kommt z.B. ein Pyrazolon-, Phenylpyrazolon-, Pyrazol- oder Pyridonrest in Frage.

Der Rest K kann an seinem Grundgerüst die in der Azochemie üblichen Substituenten gebunden enthalten.

Beispiele für geeignete Substituenten am Rest K sind:

$C_1$-$C_4$-Alkyl, womit generell Methyl, Ethyl, n- oder iso-Propyl oder n-, sec- oder tert.-Butyl umfasst ist; $C_1$-$C_4$-Alkoxy, worunter generell Methoxy, Ethoxy, n- oder iso-Propoxy oder n-, sec.- oder tert.-Butoxy zu verstehen ist; Amino; N-Mono- oder N,N-Di-$C_1$-$C_4$-Alkylamino, wobei das Alkyl gegebenenfalls z.B. durch -OH, -$OCOCH_3$, -$OSO_3H$, -CN oder Halogen weitersubstituiert sein kann, z.B. Methylamino, Ethylamino, n- oder iso-Propylamino oder n-, sec-oder tert.-Butylamino, N,N-Dimethyl- oder -Diethylamino, β-Chlorethylamino, β-Cyanethylamino, β-Acetyloxyethylamino, N-(β-Hydroxyethyl),N-ethyl-amino, β-Sulfatoethylamino, N,N-Di-(β- hydroxyethyl)-amino, N,N-Di-(β-Sulfatoethyl)-amino oder Hydroxypropylamino; Phenylamino; $C_1$-$C_4$-Alkanoylamino, besonders Acetylamino, Propionylamino; Benzoylamino; $C_1$-$C_4$-Alkoxycarbonyl, z.B. Methoxy- oder Ethoxycarbonyl; Nitro; Cyano; Trifluormethyl; Halogen, worunter generell Fluor, Chlor und Brom zu verstehen ist; Hydroxy; Carboxy; Sulfo; Sulfomethyl; Sulfamoyl; N-Mono- oder N,N-Di-$C_1$-$C_4$-Alkylsulfamoyl; Carbamoyl; N-Mono- oder N,N-Di-$C_1$-$C_4$-Alkylcarbamoyl; Ureido.

Ferner sind auch Reaktivfarbstoffe der Formel (2) in Betracht zu ziehen, worin der Rest K noch einen weiteren Reaktivrest, z.B. einen Chlor- oder Fluortriazinrest, Halogenopyrimidinrest oder Vinylsulfonylrest einschliesst. Die zusätzlichen, in K eingeschlossenen Reaktivreste können z.B. über Aminogruppen an K gebunden sein.

Die Kupplungskomponenten weisen vorteilhaft mindestens eine Sulfogruppe, einen aliphatischen Sulfatorest wie z.B. eine Gruppe N-(β-Sulfatoethyl)-amino und insbesondere N,N-Di-(β-sulfatoethyl)amino oder einen aliphatischen sulfatierbaren Substituenten, z.B. eine Gruppe N-(β-Hydroxyethyl), N-ethyl-amino oder insbesondere N,N-Di-(β-Hydroxyethyl)-amino, auf und können darüberhinaus durch einen oder mehrere der obengenannten Reste weitersubstituiert sein.

Als Reaktivfarbstoffe der Formel (2) sind Mono- und Disazofarbstoffe bevorzugt.

Bevorzugte Untergruppen der erfindungsgemässen Reaktivfarbstoffe der Formel (2) sind:

– Reaktivfarbstoffe der Formel

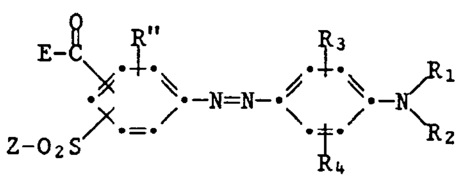

(3) ,

worin für E und Z die zuvor angegebenen Bedeutungen und Bevorzugungen gelten, R″ Wasserstoff oder Chlor bedeutet, $R_1$ und $R_2$ unabhängig voneinander für Wasserstoff, $C_1$-$C_4$-Alkyl, welches gegebenenfalls durch -OH, -$OSO_3H$, -$OCOCH_3$, -CN oder Halogen substituiert ist, oder Phenyl stehen und $R_3$ und $R_4$ unabhängig voneinander Wasserstoff, Halogen, $C_1$-$C_4$-Alkyl, $C_1$-$C_4$-Alkoxy, Trifluormethyl, $C_1$-$C_4$-Alkanoylamino oder Sulfo bedeuten.

– Reaktivfarbstoffe der Formel

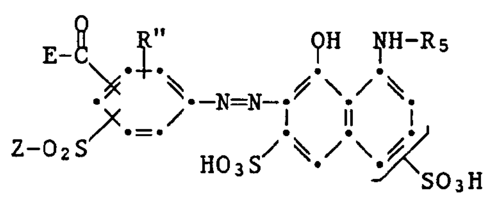

(4)

worin E, Z und R″ die unter Formel (3) angegebene Bedeutung haben und $R_5$ $C_1$-$C_4$-Alkanoyl, Benzoyl oder ein Rest der Formel

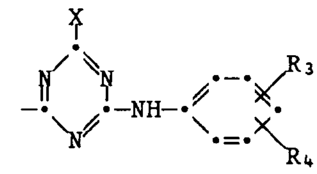

(5)

ist
worin X für

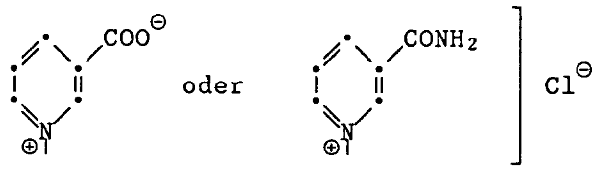

oder

und insbesondere für Chlor oder Fluor steht und $R_3$ und $R_4$ die unter der Formel (3) angegebene Bedeutung haben.

– Reaktivfarbstoffe der Formel

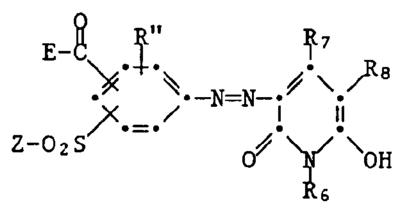

(6) ,

worin $R_6$ und $R_7$ unabhängig voneinander Wasserstoff, $C_1$-$C_4$-Alkyl oder Phenyl bedeuten und $R_6$ Wasserstoff, Cyano, Carbamoyl oder Sulfomethyl ist und E, Z und R″ die unter der Formel (3) angegebene Bedeutung haben.

– Reaktivfarbstoff der Formel

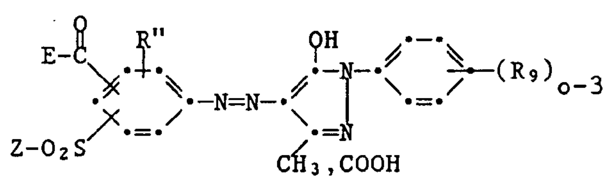

worin E, Z und R″ die unter der Formel (3) angegebene Bedeutung haben und $R_9$ für 0 bis 3 gleiche oder verschiedene Substituenten, ausgewählt aus der Gruppe Chlor, Methyl, Methoxy, Carboxy oder Sulfo, steht.

– Reaktivfarbstoffe der Formel

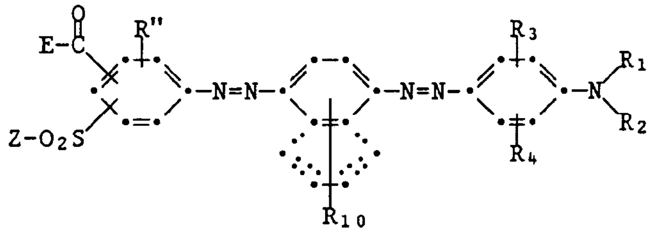

(8),

worin E, Z, R″, $R_1$, $R_2$, $R_3$ und $R_4$ die unter der Formel (3) angegebene Bedeutung haben und $R_{10}$ $C_1$-$C_4$-Alkyl, $C_1$-$C_4$-Alkoxy, Halogen oder Sulfo bedeutet.

– Reaktivfarbstoffe der Formel

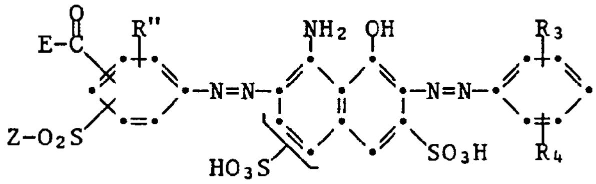

(9) ,

worin E, R″, Z, $R_3$ und $R_4$ die unter der Formel (3) angegebene Bedeutung haben.

– Schwermetallkomplexe von Reaktivfarbstoffen der Formel (2), welche zur Metallkomplexbildung befähigte Gruppen, z.B. Hydroxy, Carboxy, Amino oder Sulfo, aufweisen; als komplexbildende Schwermetalle kommen vor allem Kupfer, Nickel, Kobalt und Chrom in Betracht.

Bevorzugt sind insbesondere Verbindungen der Formeln (3) bis (9), worin R″ Wasserstoff und Z die β-Sülfatoethyl-, β-Chlorethyl- oder Vinylgruppe ist.

Bevorzugt sind weiterhin Verbindungen der Formeln (3 bis (9), worin die Gruppe $Z-O_2S-$ in para-Stellung und die Gruppe E-OC- in meta-Stellung zur Azogruppe angeordnet sind.

Die Verbindungen der Formel (2) können z.B. hergestellt werden, indem man eine Diazokomponente der Formel

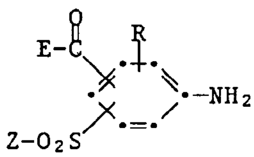

(1c)

oder ihr Vorprodukt mit einer Kupplungskomponente der Formel

H - K (10)

durch Diazotierung und Kupplung zu Reaktivfarbstoffen der Formel (2) umsetzt, oder die erhaltenen Zwischenprodukte in die gewünschten Endfarbstoffe überführt, und gegebenenfalls eine weitere Umwandlungsreaktion anschliesst. Hierbei haben E, Z, R und K jeweils die zuvor angegebene Bedeutung.

Das molare Verhältnis der Ausgangsstoffe muss der Zusammensetzung des Endprodukts entsprechend gewählt werden, je nachdem ob in K eine oder zwei Kupplungsstellen vorhanden sind.

Gegebenenfalls verwendet man statt einer Kupplungskomponente der Formel (10) ein Vorprodukt und stellt den Endfarbstoff durch eine weitere Diazotierung und/oder Kupplung oder sonstige Umwandlungsreaktionen mit dem Zwischenprodukt fertig.

Eine abgewandelte Ausführungsform des Verfahrens besteht darin, zunächst einen Farbstoff herzustellen, der eine Vorstufe des Reaktivrestes enthält und diese nachträglich in die Endstufe umzuwandeln, z.B. durch Veresterung oder eine Additionsreaktion. Beispielsweise kann man einen Farbstoff, worin Z ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff, worin Z die Gruppe $H_2C=CH-$ ist, und lagert an das Zwischenprodukt Thioschwefelsäure an, wobei ein Rest $HO_3SS-CH_2CH_2-$ entsteht. Die Sulfatierung der Hydroxygruppe in einem Farbstoff der Formel (2) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Restes für Z in eine Verbindung der Formel (2) oder ein Zwischenprodukt anstelle eines Halogenatoms oder der Sulfatogruppe, beispielsweise einer Thiosulfato- oder Phosphatogruppe, erfolgt in an sich bekannter Weise.

Ausserdem können Eliminierungsreaktionen an die Synthese angeschlossen werden. Beispielsweise kann man Reaktivfarbstoffe der Formel (2), welche Sulfatoethylsulfonylreste enthalten, mit halogenwasserstoffspaltenden Mitteln, wie Natriumhydroxid, behandeln, wobei die Sulfatoethylsulfonylreste in Vinylsulfonylreste übergehen.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach

alkalischen pH-Werten.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho- ortho′-Stellung zur Azobrücke komplexbildende Gruppen, z.B. Hydroxy- oder Carboxygruppen, enthalten, mit schwermetallabgebenden Mitteln behandelt. Von besonderem Interesse sind Kupferkomplexe von Reaktivfarbstoffen der Formel (2). Als Methode der Metallisierung kommt ausser der oben genannten auch die entalkylierende Metallisierung und, für die Herstellung von Kupferkomplexen, die oxidative Kupferung in Betracht.

Die wichtigsten Verfahrensvarianten sind in den Ausführungsbeispielen dargestellt.

Aus der grossen Zahl der möglichen Kupplungskomponenten K seien die folgenden beispielhaft genannt:

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino- 3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-4-sulfonsäure, 1-Amino-8-hydroxynaphtalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6-oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin1,7-disulfonsäure, 2-Amino-8-hydroxynaphthalin-6-sulfonsäure, 2-Methyl- bzw. -Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5- hydroxynaphthalin- 7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4′-Aminobenzoylamino)-8-hydroxynaphthalin-3,6- bzw. -4,6-disulfonsäure, 1-(4′-Nitrobenzoylamino)-8-hydroxynaphthalin3,6- bzw. -4,6-disulfonsäure, 1-(3′-Aminobenzoylamino)- 8-hydroxynaphthalin-3,6- bzw. -4,6-disulfonsäure, 1-(3′-Nitrobenzoylamino)-8-hydroxynaphthalin-3,6- bzw. -4,6-disulfonsäure, 2-(4′-Amino-3′-sulfophenylamino)-5-hydroxynaphthalin-7-sulfonsäure, 3-Methylpyrazolon-(5), 1-Phenyl-3-methyl-5-pyrazolon, 1-(4′-Sulfophenyl)-3-methyl-5-pyrazolon, 1-(4′-Sulfophenyl)-pyrazolon-(5)-3-carbonsäure, 1-(3′-Aminophenyl)-3-methyl-5-pyrazolon, 1-(2′,5′-Disulfophenyl)-3-methyl-5-pyrazolon, 1-(2′-Methyl-4′-sulfophenyl)-5-pyrazolon-3-carbonsäure, 1-(4′,8′-Disulfonaphthyl-[2′])-3-methyl-5-pyrazolon, 1- (5′, 7′-Disulfonaphthyl-[2′])-3-methyl-5-pyrazolon, 1-(2′,5′-Dichlor-4′-sulfophenyl)-3-methyl-5-pyrazolon, 3-Aminocarbonyl-4-methyl-6-hydroxypyridon-(2), 1-Ethyl-3-cyan- oder -3-chlor-4-methyl-6-hydroxypyridon-(2), 1-Ethyl-3-sulfomethyl-4-methyl-6-hydroxypyridon-(2), 2,4,6-Triamino-3-cyanpyridin, 2-(3′-Sulfophenylamino)-4,6-diamino-3-cyanpyridin, 2-(2′-Hydroxyethylamino)-3-cyan-4-methyl-6-aminopyridin, 2,6-Bis-(2′-hydroxyethylamino)-3-cyan-4-methylpyridin, 1-Ethyl-3-carbamoyl-4-methyl-6-hydroxypyridon-(2), 1-Ethyl-3-sulfo- methyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4′-sulfophenylazo)-naphthalin-3,6-disulfonsäure, 1-Amino-8-hydroxy-2- (2′, 5′-disulfophenylazo)-naphthalin-3,6-disulfonsäure, 1-β-Aminoethyl-3-cyan-4-methyl-6-hydroxypyridon-(2), 1-γ-Aminopropyl-3-sulfomethyl-4-methyl-6-hydroxypyridon-(2), 1,3-Diaminobenzol, 1-Amino-3-N,N-di-β-hydroxyethylaminobenzol, 1-Amino-3-N,N-di-β-sulfatoethylaminobenzol, 1-Amino-3-N,N-di-β-hydroxyethylamino-4-methoxybenzol, 1-Amino-3-N,N-di-β-sulfatoethylamino-4-methoxybenzol, 1-Amino-3-sulfo-benzylaminobenzol, 1-Amino-3-sulfo-benzylamino-4-chlorbenzol, 1-Amino-3-N,N-di-sulfobenzylaminobenzol, N,N-Di-(β-sulfatoethyl)-anilin, β-Acetylamino-N,N-di-(β-sulfatoethyl)-anilin, 3-Methyl-N,N-di-(β-sulfatoethyl)anilin, N-Ethyl-N-(β-hydroxyethyl)-anilin, N-Ethyl-N-(β-acetoxyethyl)-anilin, 3-Acetylamino-N,N-di(β-hydroxyethyl)-anilin, 3-Methyl-N,N-di-(β-acetoxyethyl)-anilin, 2-Methoxy-5-acetylamino-N-(β-acetoxyethyl)-N-benzylanilin, 2-Chlor-5-acetylamino-N-(γ-phenoxy-β-hydroxy-n-propyl)-anilin, 3-Ureidoanilin, N-Ethyl-N-(3′-sulfobenzyl)- anilin, 3-Methyl-N-ethyl-N-(β-sulfatoethyl)-anilin, 3-Methyl-N,N-di-(β-hydroxyethyl)-anilin, 3-Methyl-6-methoxy-N,N-di-(β-hydroxyethyl)-anilin.

Ein gegebenenfalls in K eingeschlossener zusätzlicher Reaktivrest ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom

oder eine abspaltbare Gruppe substituierter carbo- oder heterocyclischer 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogentome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest. Als zusätzliche Reaktivreste kommen insbesondere Triazine in Betracht. Diese sind beispielsweise an die Aminogruppe der H-, K-, J- oder γ-Säure, eines 3-Ureido- oder 3-Acetylaminoanilins oder eines 1-(Aminophenyl)pyrazolons gebunden.

Verwendet man ein Trihalogentriazin, so kann man vorteilhaft vor oder nach der Acylierung einer Aminogruppe des Diamins ein Halogenatom am Triazinring durch einen nichtreaktiven Substituenten, vorzugweise eine Aminogruppe, ersetzen. Als für diesen Zweck verwendbare Amine kommen z.B. Ammoniak, Methylamin, Ethylamin, β-Hydroxyethylamin, N,N-Di-β-hydroxyethylamin, β-Sulfoethylamin, Cyclohexylamin, Morpholin, N-Methyl-N-phenylamin, N-Ethyl-N-phenylamin oder Benzylamin, oder auch faserreaktive Amine, wie β-(β′-Chlorethylsulfonyl)ethylamin oder β-(β′-Vinylsulfonylethoxy)ethylamin, und insbesondere die weiter unten als Diazokomponenten genannten Verbindungen in Betracht. Wichtige Triazinsubstituenten sind also die Reste von Anilin, o-Toluidin, p-Toluidin, Anisidin, p-Chloranilin, Methanilsäure, Sulfanilsäure, Anthranilsäure, Orthanilsäure, 1-Naphthylamin, 2-Naphthylamin, 2-Aminonaphthalin-1-sulfonsäure (Tobias-Säure), 2-Aminonaphthalin-4,8-disulfonsäure (C-Säure) usw., und insbesondere die Reste von Diazokomponenten, welche faserreaktive Gruppen enthalten, z.B. 1-Amino-4-β-sulfatoethylsulfonylbenzol oder 1-Amino-3-β-vinylsulfonylethylaminocarbonylbenzol.

Enthält der Reaktivfarbstoff der Formel (2) neben der erfindungsgemässen Diazokomponente der Formel (Ic) eine weitere Diazokomponente, wie dies bei einem Disazofarbstoff der Formel

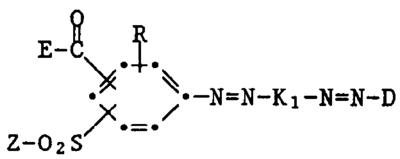

(12)

der Fall ist, worin E, R und Z die zuvor angegebene Bedeutung haben, $K_1$ der Rest einer zweifach kuppelnden Kupplungskomponente der Aminonaphtholsulfonsäure-Reihe, z.B. der Rest der H-, K- oder S-Säure, ist und D den Rest einer Diazokomponente bedeutet, so kann D z.B. der Rest einer gewöhnlichen Diazokomponente der Benzol- oder Naphthalinreihe sein, welche keinen faserreaktiven Rest enthält, z.B. Anilin; er kann aber auch der Rest einer Diazokomponente sein, die einen Reaktivrest enthält, z.B. 1-amino-4-(β-sulfatoethylsulfonyl)-benzol. Ferner kann als zweite Diazokomponente ein Diaminobenzol, z.B. 1,3-Diaminobenzol-4-sulfonsäure, verwendet werden, worin eine der beiden Aminogruppen faserreaktiv acyliert ist oder nachträglich acyliert wird, z.B. mit einem Halogentriazin oder Halogenpyrimidin. Die obigen Erläuterungen gelten sinngemäss auch für die Trisazofarbstoffe oder für Disazo- oder Tetrazofarbstoffe, welche aus Monoazo- oder Disazoverbindungen durch "Verdoppelung" über eine Brückenkomponente zustande kommen.

Als Diazokomponenten D, die, wie oben beschrieben, zusammen mit jener der Formel (1c) verwendet werden können, seien nachfolgend die wichtigsten in einer Auswahl genannt.

Aminobenzol, 1-Amino-2-, -3- oder -4-methylbenzol, 1-Amino-2-, -3-oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-4-methoxybenzol-2-sulfonsäure, 1-Amino-4-ethoxybenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1- Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin,-2,5,7-trisulfonsäure, 2-Aminonaphthalin-1,5,7-, -3,6,8-oder -4, 6, 8-trisulfonsäure, 4-Aminoazobenzol-3,4′-disulfonsäure, 3-Methoxy-4-amino-6-methylazobenzol-2′,4′-disulfonsäure, 3-Methoxy-4-amino-6-methylazobenzol-2′,5′-disulfonsäure, 1-Amino-4-β-sulfatoethylsulfonylbenzol, 1-Amino-4-vinylsulfonylbenzol, 1-Amino-3-vinylsulfonylbenzol, 1-Amino-4-β-sulfatoethylsulfonylbenzol- 2- sulfonsäure, 1-Amino-4-[β-(β′-chlorethylsulfonyl)ethylaminocarbonyl]benzol-2-sulfonsäure, 1-Amino-4-β-(vinylsulfonyl)ethylaminocarbonylbenzol-2-sulfonsäure, 1-Amino-3-γ-(vinylsulfonyl)butyrylaminobenzol-6-sulfonsäure, 1-Amino-3-vinylsulfonyl-6-methoxybenzol, 1-Amino-3-β-(vinylsulfonyl)ethylaminocarbonyl-6-methoxybenzol

und 1-Amino-3-β-(vinylsulfonyl)ethylaminocarbonylbenzol; ferner Diaminobenzole oder Diaminonaphthaline, wie 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1-Amino-3-aminomethylbenzol-6-sulfonsäure, 1-Amino-3-aminomethyl-4-methoxybenzol-2-sulfonsäure, 2,6-Diaminonaphthalin-4,8-disulfonsäure, 2-Amino-5-aminomethylnaphthalin-1-sulfonsäure und 2-Amino-5-aminomethylnaphthalin-1,7-disulfonsäure; statt eines Diamins kann auch eine Aminoacetylaminoverbindung eingesetzt werden, aus welcher nachträglich die Acetylgruppe durch Verseifen wieder abgespalten wird, z.B. 1-Acetylamino-3-aminobenzol-4-sulfonsäure oder 1-Acetylamino-4-aminobenzol-3-sulfonsäure. Als Reaktivkomponenten, die zur Umsetzung mit der zweiten Aminogruppe in einem der genannten Diamine verwendet werden können, kommen vor allem aliphatische und heterocyclische Verbindungen, die ausser einer reaktiven Gruppe oder einem reaktiven Atom noch eine Acylfunktion enthalten, in Betracht, z.B. α,β-Dibrompropionylchlorid, α-Bromacryloylchlorid, γ-Vinylsulfonyl-butyrylchlorid und insbesondere Halogenpyrimidine und die bei der Erläuterung der Kupplungskomponenten K erwähnten substituierten Triazine.

Durch die erfindungsgemässe Formel (2) werden weiterhin Farbstoffe der Formel

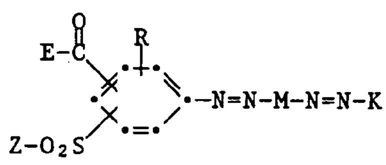

(13)

mitumfasst, worin E, Z, R und K die zuvor angegebene Bedeutung haben und M eine Mittelkomponente der Benzol- oder Naphthalinreihe darstellt.

Geeignete Mittelkomponenten M sind z.B. solche Benzol- oder Naphthalinderivate, die eine Aminogruppe oder einen z.B. durch Verseifung in eine Aminogruppe überführbaren Rest, z.B. eine Acetylamino- oder Benzoylaminogruppe, aufweisen und darüberhinaus gegebenenfalls mit den zuvor für K angegebenen Resten weitersubstituiert sind.

Beispiele für geeignete Mittelkomponenten M sind:
Anilin; m-Toluidin;
2,5-Dimethyl- oder -Dimethoxy-anilin;
m-Amino-anisol; m-Acetylamino-,
m-Propionylamino-, m-Butyrylamino- oder
m-Benzoylamino-anilin;
m-Amino-phenylharnstoff;
4-Acetamino-2-amino-toluol oder -anisol;
2-Amino-4-methylanisol;
1-Aminonaphthalin-6- oder -7-sulfonsäure;
2-Amino-4-acetylamino-benzolsulfonsäure;
2-Amino-5-naphthol-7-sulfonsäure;
2-Amino-8-naphthol-6-sulfonsäure;
2-(4-Aminobenzoyl-amino)-5-naphthol-7-sulfonsäure;
Acetoacet-3-sulfo-4-amino-anilid.

Eine weitere Gruppe von brauchbaren erfindungsgemässen Reaktivfarbstoffen umfasst Verbindungen der zuvor angegebenen Formel (14).

Ist hierbei p 0, so kann es sich bei dem Brückenglied B z.B. um eine direkte Bindung oder um eine Gruppe $-CH_2-$, -CO- oder $-SO_2-$ handeln.

Ist p 1, steht B z.B. für einen weiteren Reaktivrest, z.B. für den Rest eines durch ein abspaltbares Atom oder eine abspaltbare Gruppe substituierten carbo- oder heterocyclischen 5- oder 6-Rings; in Frage kommen hierbei z.B. ein Halogenpyrimidinrest der Formel

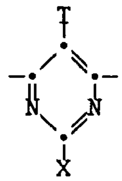

(15a),

worin X Halogen, besonders Fluor oder Chlor, und T ein negativer Substituent, z.B. $-SO_2-CH_3$, -CN, -Cl, -F, Formyl oder Nitro ist, und insbesondere ein Halogentriazinrest der Formel

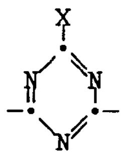

(15b),

worin X

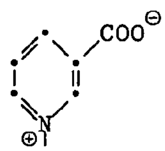

,

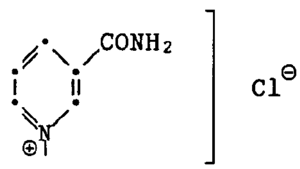

oder Halogen und vorzugsweise Fluor oder Chlor bedeutet.

Eine bevorzugte Untergruppe der erfindungsgemässen Reaktivfarbstoffe der Formel (14) umfasst Verbindungen der Formel

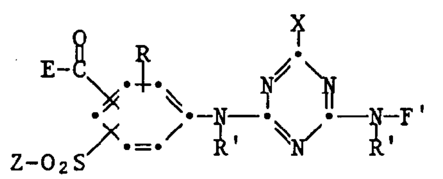

(16)

worin E, X, Z, R und R′ die zuvor angegebene Bedeutung haben und F′ ein Mono- oder Disazofarbstoff der Formel

$$D-N=N-(M-N=N-)_nK- \qquad (17a)$$

oder

$$-D-N=N-(M-N=N-)_nK \qquad (17b)$$

ist, wobei D, M und K die zuvor angegebene Bedeutung haben und n 0 oder 1 ist.

Besonders bevorzugt sind Verbindungen der Formel

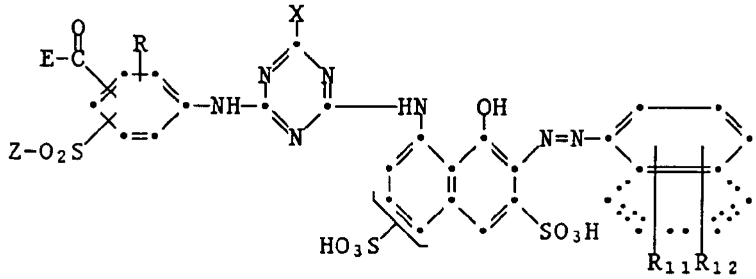

(18),

worin E, Z, R und X die zuvor angegebene Bedeutung haben und $R_{11}$ und $R_{12}$ unabhängig voneinander Wasserstoff, Sulfo oder Nitro bedeuten.

Eine weitere wichtige Gruppe von Farbstoffen der Formel (14) umfasst solche, worin F der Rest eines Sulfophthalocyaninfarbstoffs ist. Hierbei ist F z.B. ein Rest der Formel

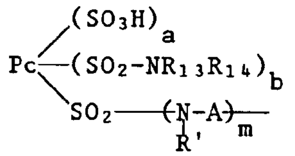 (19),

worin Pc der Rest eines metallhaltigen oder metallfreien Phthalocyanin-Kerns, vorzugsweise eines Kupfer- oder Nickelphthalocyanins, ist,
$R_{13}$ und $R_{14}$ unabhängig voneinander Wasserstoff oder $C_1$-$C_4$-Alkyl bedeuten,
R′ die unter der Formel (1) angegebene Bedeutung hat, A ein $C_2$-$C_6$-Alkylenrest, z.B. ein Ethylenrest oder ein unsubstituierter oder z.B. durch Sulfo oder -COOH substituierter bivalenter m- oder p-Phenylenrest ist, m 0 oder, wenn B ein Reaktivrest ist, 1 bedeutet und a und b ganze oder gebrochene Zahlen von 1 bis 3 sind, wobei a und b zusammen 3,0 ergeben.

Eine bevorzugte Ausführungsform der erfindungsgemässen Reaktivfarbstoffe der Formel (19) umfasst Verbindungen der Formel

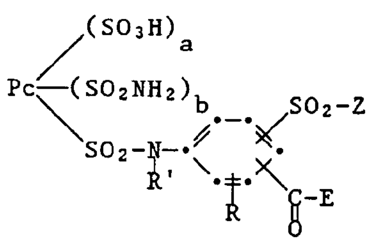 (20)

worin Pc, E, R, R′, Z, a und b jeweils die zuvor angegebene Bedeutung haben.

Weitere bevorzugte Untergruppen der erfindungsgemässen Farbstoffe der Formel (14) sind:

– Anthrachinon-Verbindungen der Formel

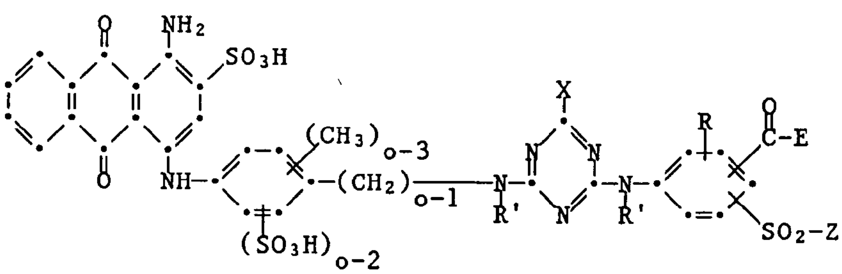 (21),

worin E, R, R′, X und Z jeweils die zuvor angegebene Bedeutung haben.

– Formazan-Verbindungen der Formel

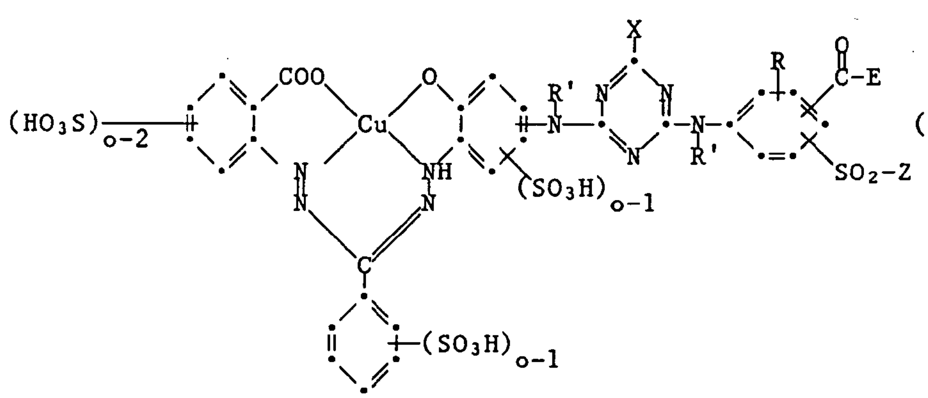 (22),

worin E, R, R′, X und Z jeweils die zuvor angegebene Bedeutung haben.

Verbindungen der Formel (14) mit p = 0 können z.B. hergestellt werden, indem man eine Verbindung der Formel

F-B-Hal (23),

worin F und B die zuvor angegebene Bedeutung haben und Hal für Halogen und insbesondere für Chlor steht, oder Farbstoffvorprodukte mit einer Verbindung der Formel

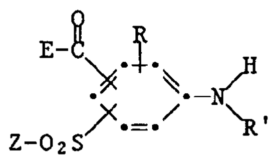

(1),

worin E, Z, R und R′ jeweils die zuvor angegebene Bedeutung haben, umsetzt.

Die Verbindungen der Formel (23) sind bekannt oder können auf an sich bekannte Weise erhalten werden.

Die Verbindungen der Formel (1) bzw. (1c) sind neu und stellen einen weiteren Gegenstand der Erfindung dar. Sie können z.B. hergestellt werden, indem man eine Verbindung der Formel

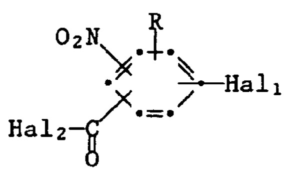

(11) ,

worin R die zuvor angegebene Bedeutung hat und $Hal_1$ und $Hal_2$ unabhängig voneinander Halogen und vorzugsweise beide Chlor bedeuten, zunächst mit einem Amin der Formel

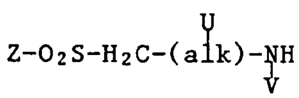

(Ia*),

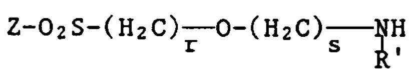

(Ib*),

$Z-O_2S-(alk')-NH-(alk'')-NH_2$ (Ic*)

oder

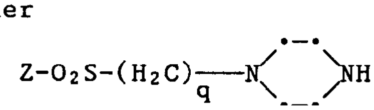

(Id*),

worin Z, U, V, R′, alk, alk′, alk″, r, s und q die zuvor angegebene Bedeutung haben, und dann mit 2-Mercaptoethanol umsetzt, die erhaltene Verbindung zur Di-Sulfonylverbindung oxidiert, die Nitrogruppe zur Aminogruppe reduziert, gegebenenfalls eine Abgangsgruppe, z.B. $-OSO_3H$, $-OCOCH_3$, $-SSO_3H$ oder $-OPO_3H_2$, einführt und/oder gegebenenfalls die Aminogruppe in an sich bekannter Weise alkyliert.

In Abänderung des oben beschriebenen Verfahrens kann anstelle der Nitroverbindung der Formel (11) auch die entsprechende Aminoverbindung eingesetzt werden, womit der Reduktionsschritt der Nitrogruppe entfällt.

Eine weitere Variante des oben beschriebenen Verfahrens besteht darin, anstelle der Amine der Formeln (Ia*) bis (Id*) geeignete Vorprodukte einzusetzen und diese nachträglich in die entsprechenden Amine umzuwandeln.

Geeignete Vorprodukte sind z.B. die den Formeln (Ia*) bis (Id*) analogen Thioetheramine, die nach der Umsetzung mit einer Verbindung der Formel (11) in bekannter Weise zu den entsprechenden Sulfonen oxidiert werden können.

Es ist auch möglich, zunächst geeignete Halogenalkylamine mit dem Säurechlorid der Formel (11) reagieren zu lassen und die dabei erhaltenen Verbindungen mit 2-Mercaptoethanol und Natriumalkoholat in Alkohol

zu den oben genannten Thioetheraminen umzusetzen, welche anschliessend wiederum zu den Sulfonen der Formeln (Ia*) bis (Id*) oxidiert werden können.

Vorzugsweise werden solche Amine der Formeln (Ia*) bis (Id*) bzw. deren Vorprodukte eingesetzt, welche eine Vorstufe des Reaktivrestes enthalten und dementsprechend Z z.B. einen Rest der Formel $HO-H_2C-H_2C-$ darstellt. Die Vorstufe des Reaktivrestes wird dann nachträglich wie zuvor beschrieben in die Endstufe überführt.

Die Amine der Formeln (Ia*) bis (Id*) bzw. deren Vorprodukte sind z.B. aus der EP-A 210 951 bekannt oder lassen sich analog dazu herstellen.

Die Umsetzung (Kondensation) des Säurechlorids der Formel (11) mit den vorgenannten Aminen erfolgt zum Beispiel in wässrigem, wässrig-organischem oder organischem Medium bei einer Temperatur zwischen etwa 0° und 120°C, vorzugsweise 10° bis 60°C, in Gegenwart von alkalischen säurebindenden Mitteln, z.B. Alkalimetallhydroxiden, -carbonaten oder -bicarbonaten.

Die Oxidation der Thioetherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die Reduktion der Nitrogruppe zur Aminogruppe erfolgt in an sich bekannter Weise durch katalytische Hydrierung mit Pd/Kohlenstoff in Ethanol, Essigester oder Tetrahydrofuran bei Raumtemperatur bis etwa 40°C. Die Reduktion kann auch mit Fe/Salzsäure oder Fe/Essigsäure in wässriger Lösung durchgeführt werden.

Die so erhältlichen Carbonsäureamide, in denen die Gruppierung $-SO_2-Z$ eine β-Hydroxyethylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl- oder Arylcarbonsäurehalogeniden oder Alkyl- oder Arylcarbonsäureanhydriden in die entsprechenden Farbstoffvorprodukte übergeführt werden, in denen die Gruppierung $-SO_2-Z$ z.B. die Gruppierung $-SO_2-CH_2-CH_2-O-SO_3H$, $-SO_2-CH_2-CH_2-O-PO_3H_2$, $-SO_2-CH_2-CH_2-$Halogen, $-SO_2-CH_2-CH_2-O-CO-CH_3$ oder $-SO_2-CH_2-CH_2-O-CO-C_6H_5$ bedeutet. Die so erhaltenen Produkte können ihrerseits durch Behandeln mit alkalisch wirkenden Mitteln, wie beispielsweise Alkalihydroxid oder Alkalicarbonat, wie Natriumhydroxid oder Natriumcarbonat, in entsprechende Verbindungen übergeführt werden, in denen die Gruppierung $-SO_2-Z$ die Gruppierung $-SO_2-CH=CH_2$ bedeutet. Die so erhaltenen Produkte können wiederum durch Umsetzung (Addition) mit Salzen der Thioschwefelsäure, wie Natriumthiosulfat, in Verbindungen übergeführt werden, in denen die Gruppierung $-SO_2-Z$ die Gruppierung $-SO_2-CH_2-CH_2-S-SO_3H$ bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta- oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Die Umsetzung der Verbindung der Formel (23) mit der Verbindung der Formel (1) wird z.B. in einem wässrigem, wässrig-organischem oder organischem Medium bei einer Temperatur von z.B. 0 bis 100°C und vorzugsweise 10-70°C durchgeführt; vorzugsweise wird dabei der pH-Wert der Reaktionslösung durch Zugabe von Base, z.B. Soda oder Natriumhydrogencarbonat, neutral bis leicht sauer gehalten.

Verbindungen der Formel (14) mit p = 1 können z.B. hergestellt werden, indem man einen organischen Farbstoff der Formel

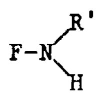

(24),

worin F und R′ die zuvor angegebene Bedeutung haben, oder Farbstoff-vorprodukte zunächst mit einer Verbindung der Formel

Hal-B-Hal (25),

worin B die zuvor angegebene Bedeutung hat und Hal Halogen und insbesondere Chlor oder Fluor bedeutet, zur Verbindung der Formel

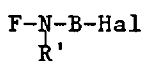

(26)

umsetzt und diese anschliessend mit einer Verbindung der zuvor angegebenen Formel (1) zum Reaktivfarbstoff der Formel (14) reagieren lässt.

Die Verbindungen der Formel (24) sind bekannt oder können in an sich bekannter Weise erhalten werden.

Die Verbindungen der Formel (25) sind ebenfalls an sich bekannt; Beispiele für geeignete Verbindungen der Formel (25) sind Tri- oder Tetrahalogenpyrimidine wie z.B. 2,4,6-Trifluor-5-methylsulfonylpyrimidin, 2,4,6-Trichlor-5-methylsulfonylpyrimidin oder 2,4,6-Trifluor-5-chlorpyrimidin und insbesondere Trihalogentriazine wie 2,4,6-Trichlortriazin oder 2,4,6-Trifluortriazin.

Die Herstellung der Farbstoffe der Formel (26) und der erfindungsgemässen Reaktivfarbstoffe der Formel (14) kann auch in vorteilhafter Weise miteinander kombiniert werden, wobei zunächst ein Farbstoff der Formel (24) mit einer Verbindung der Formel (25) zum Farbstoff der Formel (26) und dieser anschliessend ohne Isolierung des Farbstoffs der Formel (26) mit einem Amin der Formel (1) zu einem erfindungsgemässen Reaktivfarbstoff der Formel (14) umgesetzt wird. Die Umsetzung der Farbstoffe der Formel (24) mit den Verbindungen der Formel (25) führt man zweckmässigerweise bei niederen Temperaturen, etwa zwischen -2 und +10°C, vorzugsweise zwischen 0 und 5°C, unter Zusatz von säurebindenden Mitteln wie Natriumhydroxid, Soda oder Natriumhydrogencarbonat in einem pH-Bereich zwischen 1,5 und 9, vorzugsweise zwischen 4 und 6, durch.

Als Lösungsmittel dient bevorzugt Wasser, das einen gewissen Anteil an organischen Lösungsmitteln, wie z.B. Aceton, enthält. Doch lässt sich die Umsetzung auch in reinem Wasser durchführen.

Für die weitere Umsetzung der so erhaltenen Farbstoffe der Formel (26) mit den Aminen der Formel (1) setzt man die Amine zweckmässigerweise in Form eines Salzes, bevorzugt in Form des Hydrochlorids, ein. Die Umsetzung wird bei erhöhter Temperatur, etwa zwischen 5 und 70°C, bevorzugt zwischen 5 und 30°C, unter Zusatz säurebindender Mittel, bevorzugt Natriumhydrogencarbonat, in einem pH-Bereich von 2 bis 8, bevorzugt 3,5 bis 7,5, durchgeführt.

Wenn der Farbstoffrest F aus mehreren Komponenten zusammengesetzt ist, wie z.B. bei Azofarbstoffen oder Formazanfarbstoffen, sind die erfindungsgemässen Farbstoffe der Formel (14) auch in der Weise erhältlich, dass man sie in an sich bekannter Weise aus Komponenten von F aufbaut, von denen eine eine Gruppe der Formel

$$-\underset{R'}{\underset{|}{N}}-B-Hal \qquad (25a)$$

worin R′, B und Hal die oben angegebenen Bedeutungen haben, enthalten.

Derartige Komponenten werden erhalten durch Acylierung der entsprechenden, eine Gruppe -NHR′ enthaltenden Komponenten mit einer Verbindung der Formel (25) unter Bedingungen, die den oben bei der entsprechenden Umsetzung des Farbstoffes beschriebenen entsprechen. Die so erhaltenen Farbstoffe werden dann in der oben beschriebenen Weise mit einem Amin der Formel (1) zu einem erfindungsgemässen Farbstoff entsprechend der Formel (14) umgesetzt.

Die erfindungsgemässen Farbstoffe, die Formeln (2) und (14) sind faserreaktiv. Unter faserreaktiven Farbstoffen sind solche zu verstehen, die mit den Hydroxylgruppen der Cellulose oder mit den reaktiven Zentren von natürlichen oder synthetischen Polyamiden unter Bildung kovalenter chemischer Bindungen zu reagieren vermögen.

Die erfindungsgemässen Reaktivfarbstoffe der Formeln (2) und (14) eignen sich zum Färben und Bedrucken der verschiedensten Materialien, wie Seide, Leder, Wolle, Polyamidfasern und besonders cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemässen Reaktivfarbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eins dispergierend wirkenden und die Diffusion der nicht fixierten Anteile fördernden Mittels gründlich gespült.

Die erfindungsgemässen Reaktivfarbstoffe zeichnen sich durch hohe Reaktivität, gutes Fixiervermögen

und ein gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Reaktivfarbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumteilen im Verhältnis von Kilogramm zu Liter.

Herstellung der Zwischenprodukte der Formel (1)

Beispiel 1:

Zu einem Gemisch, bestehend aus 61 g 2-Amino-2′-hydroxydiethylsulfid, 100 ml Toluol und 400 ml Wasser, wird bei einer Temperatur von 15-20°C unter intensivem Rühren eine Lösung von 110 g 2-Chlor-5-nitrobenzoylchlorid in 250 ml Toluol zugetropft, und dabei der pH-Wert mittels Zugabe von Natriumhydroxidlösung so gesteuert, dass er nicht unter 8,5 - 9,0 absinkt. Anschliessend wird der pH-Wert mit Salzsäure auf 7,0 gestellt und das Toluol und ein Teil des Wassers im Vakuum verdampft. Der Rückstand wird in ca. 400 ml Wasser aufgeschlämmt und mit Natriumcarbonat auf pH 9 eingestellt. Anschliessend wird das Produkt abgesaugt, mit Wasser neutral gewaschen und getrocknet. Man erhält die Verbindung der Formel

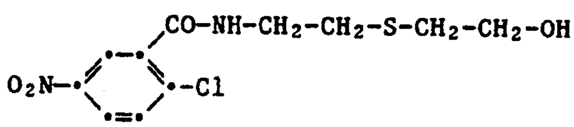

(27)

als hellgelbes Pulver.

Beispiel 2:

Ein Gemisch, bestehend aus 91,5 g der Verbindung der Formel (27) gemäss Beispiel 1, 60 ml Dimethylformamid, 25,8 g 2-Mercaptoethanol und 26,55 g Natriumhydrogencarbonat, wird 7 Stunden lang bei einer Temperatur von 78-80°C gerührt. Nach dem Erkalten wird das Reaktionsgemisch mit 500 ml 20%igem Ethanol verdünnt und danach das abgeschiedene Produkt abgesaugt. Das Produkt wird zunächst mit 20%igem Ethanol und dann mit Wasser gewaschen; man erhält die Verbindung der Formel

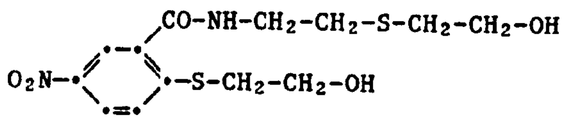

(28)

als feuchte Rohware.

Beispiel 3:

0,2 g Wolframsäure werden in 40 ml Wasser suspendiert, der pH-Wert des Gemisches mit Natriumhydroxidlösung auf pH 11-12 gestellt und anschliessend bis zur Bildung einer trüben Lösung gerührt. Man stellt den pH-wert der Lösung mit Essigsäure auf 6,0 ein und gibt 34,7 g der Verbindung der Formel (28) gemäss Beispiel 2 als feuchte Rohware hinzu. Man erhitzt auf 80-85°C und lässt bei dieser Temperatur 6,8 g Wasserstoffperoxid

in Form einer 35%igen wässrigen Lösung zutropfen. Die Temperatur wird dann auf 93-95°C erhöht und weitere 7,4 g Wasserstoffperoxid als 35%ige Lösung tropfenweise zugegeben. Man erhitzt anschliessend das Gemisch 30 Minuten unter Rückfluss und gibt gegebenenfalls noch etwas $H_2O_2$ dazu, so dass am Schluss ein geringer Ueberschuss an Wasserstoffperoxid im Reaktionsgemisch vorhanden ist.

Das nach dem Erkalten abgeschiedene Produkt wird abgesaugt, mit Wasser gewaschen und getrocknet. Man erhält das Produkt der Formel

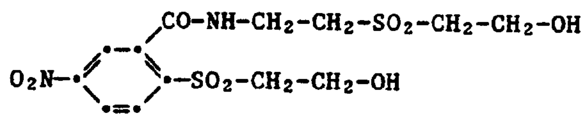 (29)

als gelbliches Pulver, Schmelzpunkt nach Umkristallisation aus Wasser 153°C.

Beispiel 4:

Ein Gemisch, bestehend aus 82 g der Verbindung der Formel (29) gemäss Beispiel 3, 4 g Palladium/Kohle Katalysator 5%ig und 460 ml Wasser wird bei einer Temperatur von 50-60°C einer katalytischen Hydrierung bis zur theoretischen Wasserstoff-Aufnahme unterworfen. Nach Abtrennung des Katalysators durch Filtration wird eine wässrige Lösung der Verbindung der Formel

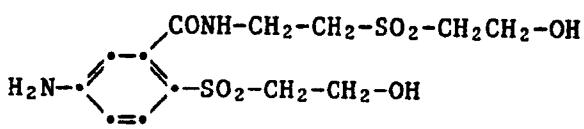 (30)

erhalten, welche sich direkt zu weiteren Umsetzungen, z.B. zur Diazotierung, verwenden lässt.

Beispiel 5:

Ein Gemisch, bestehend aus 41 g der Verbindung der Formel (29) gemäss Beispiel 3 und 200 ml Dimethylformamid wird bei einer Temperatur von 20-40°C mit 70 g Chlorsulfonsäure versetzt. Man lässt 4 Stunden bei 40-45°C rühren, giesst dann das Gemisch auf Eis, verdünnt mit Wasser und stellt den pH-Wert mit Natriumhydrogencarbonat auf 5 ein. Anschliessend wird zuerst das Wasser und dann das Dimethylformamid im Vakuum verdampft. Der salzhaltige Rückstand, der das Natriumsalz der Verbindung der Formel

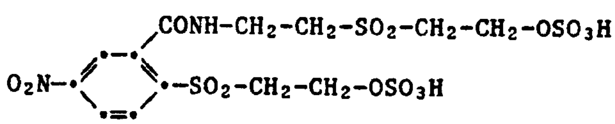 (31)

enthällt, wird in 200 ml Wasser aufgenommen und mit 2 g Palladium/Kohle 5%ig versetzt. Man unterwirft das Gemisch einer katalytischen Hydrierung bei 30-40°C bis zur theoretischen Wasserstoff-Aufnahme. Nach Abtrennung des Katalysators erhält man eine wässrige Lösung der Verbindung der Formel

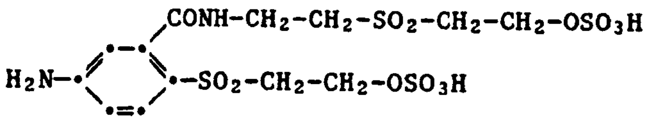 (32),

welche sich direkt zu weiteren Umsetzungen, z.B. zur Diazotierung, verwenden lässt.

Herstellung der Farbstoffe

Beispiel 6:

Zu einem Gemisch, bestehend aus 0,04 mol der Verbindung der Formel (30) gemäss Beispiel 4 (als Natriumsalz vorliegend), 80 ml Wasser und 12 ml konzentrierte Salzsäure, gibt man bei einer Temperatur von 0-2°C 10 ml 4n-Natriumnitritlösung und rührt bei derselben Temperatur bis zur vollständigen Diazotierung. Ein geringer Nitrit-Ueberschuss wird mit Sulfaminsäure zerstört.

Die Lösung des Diazoniumsalzes gibt man zu einem Gemisch, bestehend aus 9,15 g N,N-Di-(2-hydroxyethyl)-3-chloranilin, 50 ml Wasser und 2,5 ml konzentrierte Salzsäure, und lässt das Ganze bei einer Temperatur von 0-2°C rühren (Dauer ca. 3 Stunden); der pH-Wert wird dabei durch Zugabe von Natriumacetat allmählich auf 3,5 erhöht. Nach dem Erwärmen auf Raumtemperatur wird der pH-Wert mit Natriumhydroxidlösung auf 6 eingestellt und anschliessend das Produkt abgesaugt und im Vakuum getrocknet. Man erhält die Verbindung der Formel

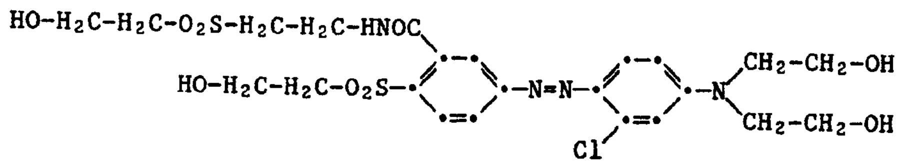

als orangefarbenes Pulver, welches sich in organischen Lösungsmitteln mit oranger Farbe löst.

Zur Ueberführung in den Sulfatoester verrührt man 18,2 g der obenstehenden Verbindung mit 60 ml Dimethylformamid, gibt bei einer Temperatur von 20-40°C 20,9 g Chlorsulfonsäure hinzu und rührt diese Mischung 4 Stunden bei 40-42°C.

Man giesst dann die Mischung auf Eis/Wasser, stellt den pH-Wert mit Natriumhydrogencarborat auf 5 ein und entfernt dann das Wasser und das Dimethylformamid durch Destillation im Vakuum. Der Rückstand wird in wenig Wasser aufgenommen und einer Dialyse unterworfen. Die so erhaltene salzarme Farbstofflösung wird im Vakuum bei 40°C zur Trockne eingedampft, wobei die Verbindung der Formel

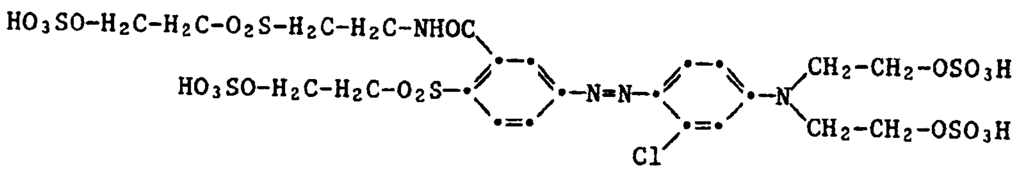

in Form des Natriumsalzes als oranges Pulver erhalten wird.

Nach den für Vinyl-sulfon-Farbstoffe üblichen Färbeverfahren als Reaktivfarbstoff auf Baumwolle appliziert, ergeben sich hohe Fixierausbeuten; die erhaltenen orangen Färbungen weisen gute Echtheitseigenschaften auf.

Derselbe Farbstoff wird erhalten, wenn man die Verbindung der Formel (32) gemäss Beispiel 5 in an sich bekannter Weise diazotiert und auf die Verbindung der Formel

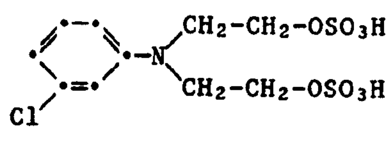

kuppelt.

Beispiel 7:

Die salzsauer diazotierte Lösung von 54 g der Verbindung der Formel (32) gemäss Beispiel 5 wird bei 0 bis 5°C und pH 5-6 zu einer wässrigen Lösung, enthaltend 28,4 g 1-(4-Sulfophenyl)-3-carboxy-5-pyrazolon, gegeben und gekuppelt; anschliessend wird die Verbindung der Formel

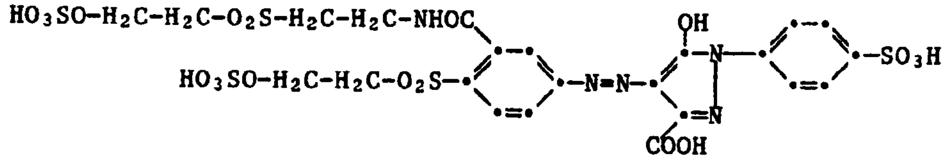

in an sich bekannter Weise isoliert. Nach dem für Vinyl-sulfon-Farbstoffe üblichen Färbeverfahren auf Baumwolle appliziert, ergeben sich gelbe Färbungen mit guten Echtheitseigenschaften bei hohen Fixierausbeuten.

Beispiel 8-13:

Verfährt man wie im Beispiel 7 beschrieben und verwendet anstelle von 1-(4-Sulfophenyl)-3-carboxy-5-pyrazolon die in der Tabelle 1 genannten Kupplungskomponenten, werden analoge Verbindungen mit der in der Tabelle angegebenen Nuance erhalten, die auf Cellulosefasern ebenfalls Färbungen mit guten Echtheitseigenschaften bei hohen Fixierwerten ergeben.

Tabelle 1

| Beispiel Nr. | Kupplungskomponente | Nuance auf Baumwolle |
|---|---|---|
| 8 | 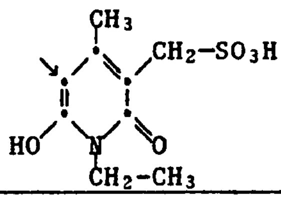 | gelb |
| 9 | 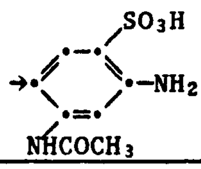 | goldgelb |
| 10 | 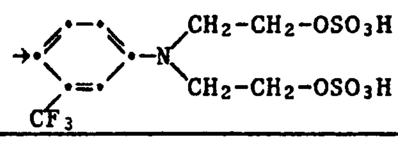 | orange |
| 11 | 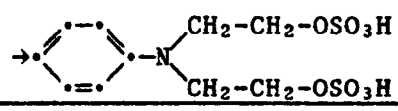 | orange |
| 12 | 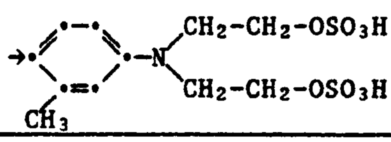 | orange |
| 13 | 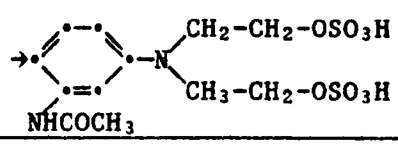 | rot |

Beispiel 14:

54 g der Verbindung der Formel (32) gemäss Beispiel 5 werden in salzsaurem Medium bei 0-2°C unter Zugabe von 25 ml 4n Natriumnitritlösung in bekannter Weise diazotiert. Die Diazoniumsalzlösung gibt man zu einer Lösung von 10,7 g 3-Methylanilin in 60 ml Wasser, worauf man zunächst im stark sauren Bereich und später, nach der Zugabe von Natriumhydrogencarbonat, im pH-Bereich 3-4 kuppelt. Nach beendeter Kupplung stellt man den pH-Wert der Reaktionsmischung auf 6,5 ein, versetzt mit 25 ml 4n Natriumnitritlösung und giesst

das Gemisch langsam auf eine Mischung, bestehend aus 300 g Eis und 30 ml 37%ige Salzsäure. Man rührt die Reaktionsmischung ca. 3 Stunden bei 3-5°C und zerstört dann den Nitritüberschuss mit Amidosulfonsäure. Anschliessend gibt man eine Lösung von 41,9 g des Dinatriumsalzes von N,N-Di-(2-sulfatoethyl)-3-chloranilin in 150 ml Wasser hinzu und kuppelt zunächst im stark sauren Bereich und dann, nach der Zugabe von Natriumhydrogencarbonat, bei pH 4-5. Nach beendeter Kupplung stellt man den pH-Wert des Reaktionsgemisches auf 5,5 ein und isoliert den gebildeten Farbstoff durch Aussalzen mit Kaliumchlorid. Nach dem Trocknen erhält man den Farbstoff der Formel

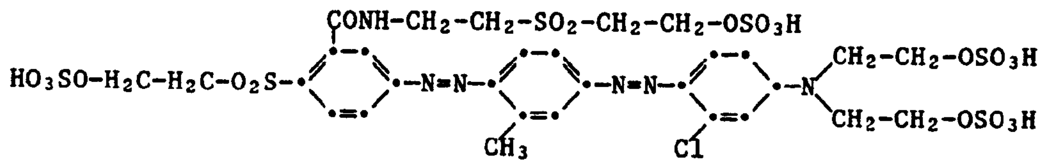

in Form seines Kaliumsalzes als dunkelbraunes Pulver. Die mit dem Farbstoff auf Cellulosefasern erhältlichen braunen Färbungen weisen gute Echtheitseigenschaften auf.

Beispiel 15:

Verfährt man wie im Beispiel 14 beschrieben, und verwendet statt 3-Methylanilin die äquivalente Menge 2-Methoxy-5-methylanilin, so erhält man den Farbstoff der Formel

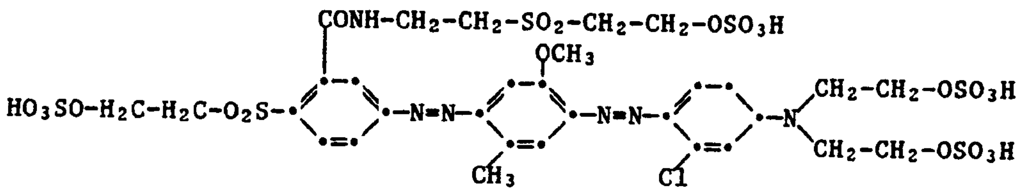,

welcher auf Cellulosefasern appliziert ebenfalls braune Färbungen mit guten Echtheitseigenschaften ergibt.

Beispiel 16:

Verfährt man wie im Beispiel 14 beschrieben und verwendet anstelle von 3-Methylanilin die äquivalente Menge 1-Naphthylamin-7-sulfonsäure, so erhält man den Farbstoff der Formel

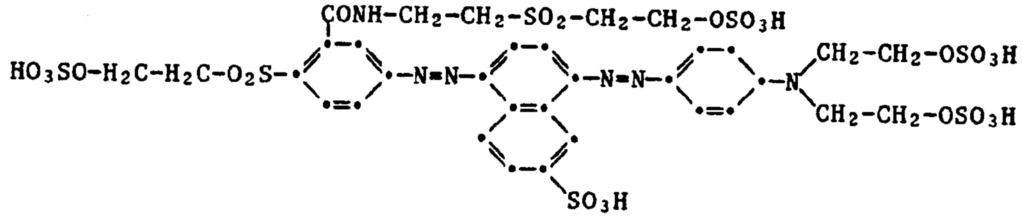,

welcher auf Cellulosefasern appliziert braune Färbungen mit guten Echtheitseigenschaften ergibt.

Beispiel 17:

54 g der Verbindung der Formel (32) gemäss Beispiel 5 werden in salzsaurem Medium bei 0-2°C unter Zugabe von 25 ml 4 n Natriumnitritlösung in bekannter Weise diazotiert. Die Diazoniumsalzlösung gibt man anschliessend bei 0-5°C zu einer Lösung von 38 g 1-Acetylamino-8-naphthol-3,6-disulfonsäure in 200 ml Wasser und regelt den pH-Wert der Reaktionsmischung mit Natriumacetat auf einen Wert von 3,5-4,0 ein. Nach beendeter Kupplung wird auf pH 5,5 gestellt und der gebildete Farbstoff der Formel

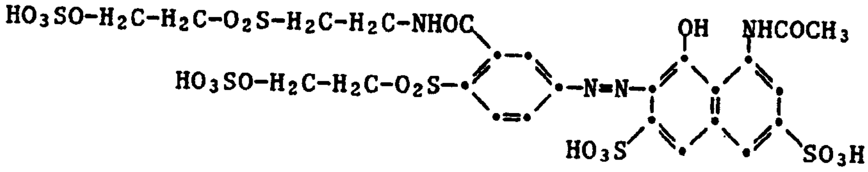

als Natriumsalz isoliert. Der Farbstoff ergibt auf Cellulosefasern appliziert rote Färbungen mit guten Echtheitseigenschaften.

Wird die Farbstofflösung nach beendeter Kupplung 10 Minuten bei 40°C und pH 9-10 gerührt und anschliessend der Farbstoff bei pH 5,5 isoliert, so erhält man den Farbstoff der Formel

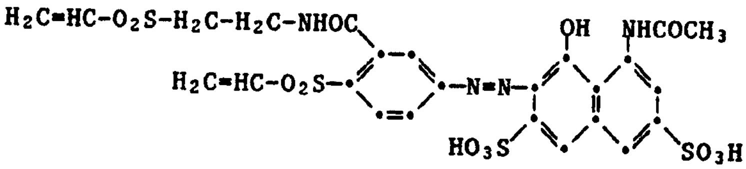

welcher ähnliche gute Eigenschaften wie der oben beschriebene Farbstoff aufweist.

Beispiele 18-36:

Verfährt man wie im Beispiel 17 beschrieben und verwendet anstelle von 1-Acetylamino-8-naphthol-3,6-disulfonsäure die in der Tabelle 2 genannten Kupplungskomponenten, werden analoge Farbstoffe mit der in der Tabelle aufgeführten Nuance erhalten.

Tabelle 2:

| Beispiel Nr. | Kupplungskomponente | Nuance auf Baumwolle |
|---|---|---|
| 18 | 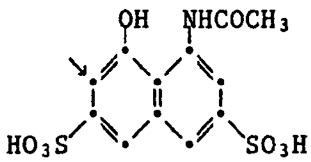 | rot |
| 19 | 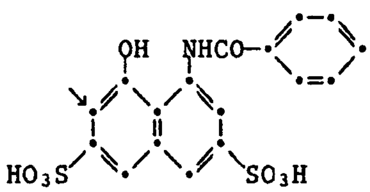 | blaustichig rot |
| 20 | 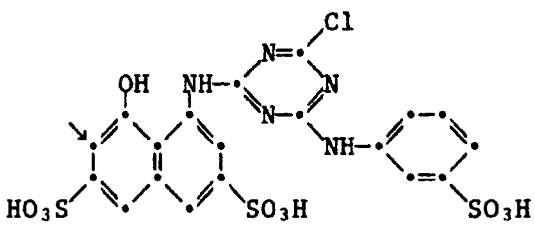 | blaustichig rot |
| 21 | 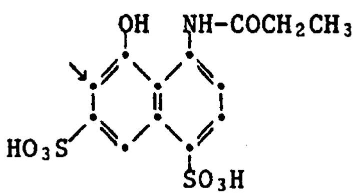 | rot |
| 22 | 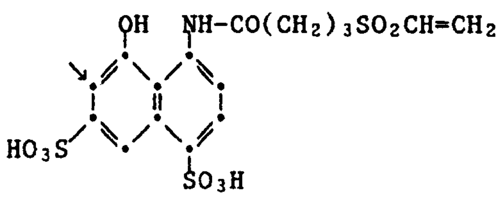 | rot |
| 23 | 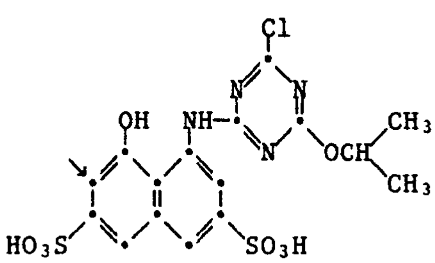 | blaustichig rot |

Tabelle 2: (Fortsetzung)

| Beispiel Nr. | Kupplungskomponente | Nuance auf Baumwolle |
|---|---|---|
| 24 | 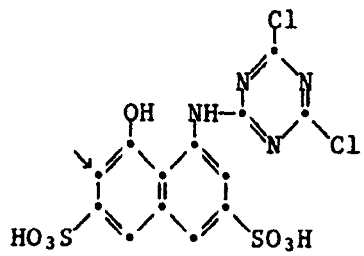 | blaustichig rot |
| 25 | 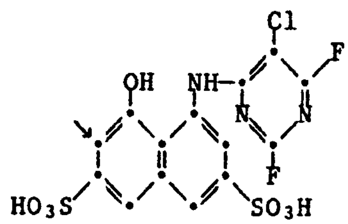 | blaustichig rot |
| 26 | 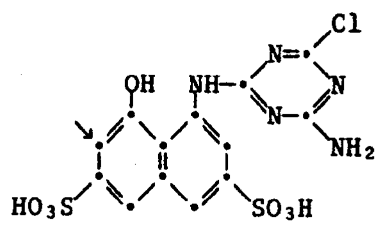 | blaustichig rot |
| 27 | 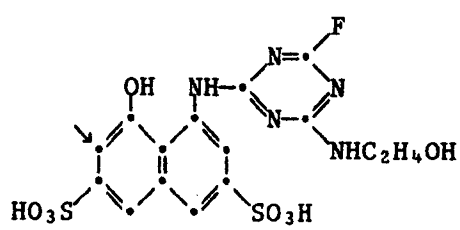 | blaustichig rot |
| 28 | 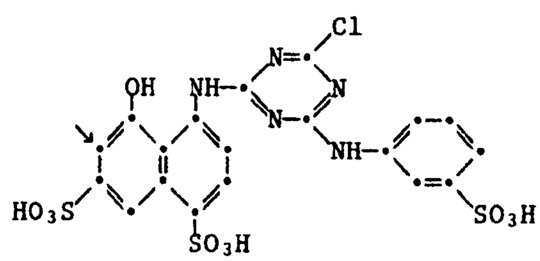 | blaustichig rot |

Tabelle 2: (Fortsetzung)

| Beispiel Nr. | Kupplungskomponente | Nuance auf Baumwolle |
|---|---|---|
| 29 | 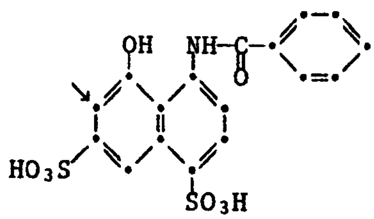 | rot |
| 30 | 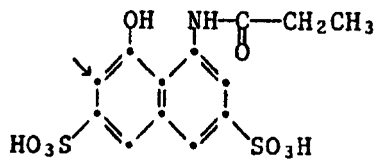 | rot |
| 31 | 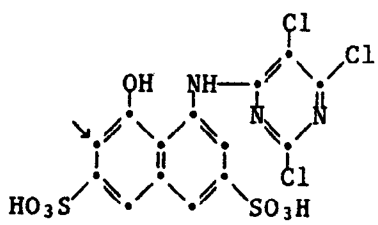 | blaustichig rot |
| 32 | 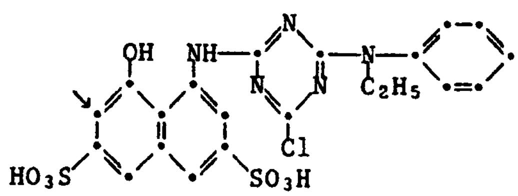 | blaustichig rot |
| 33 | 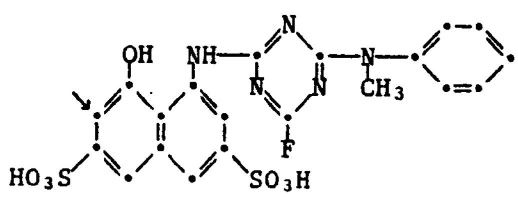 | blaustichig rot |
| 34 | 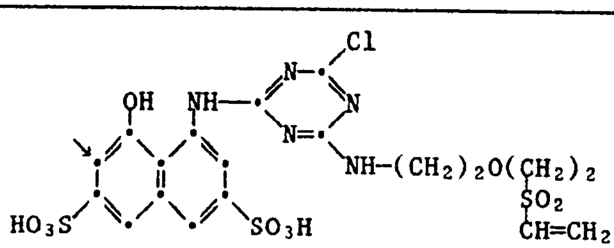 | blaustichig rot |

Tabelle 2: (Fortsetzung)

| Beispiel Nr. | Kupplungskomponente | Nuance auf Baumwolle |
|---|---|---|
| 35 | 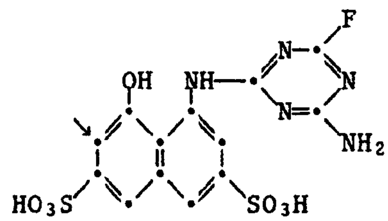 | blaustichig rot |
| 36 | 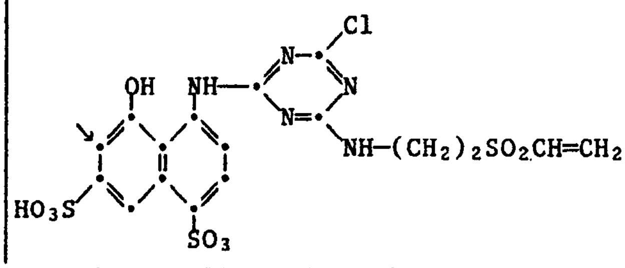 | blaustichig rot |

Beispiel 37:

135 Teile der Verbindung der Formel (32) gemäss Beispiel 5 werden in 400 Teile Wasser eingetragen und bei 20 bis 22°C innerhalb einer Stunde mittels Natriumhydrogencarbonat bei einem pH-Wert von 5,3 bis 6,0 gelöst. Sodann werden 54 Volumenteile einer 31%igen wässrigen Salzsäure und 225 Teile Eis zugegeben, um die Lösung kongosauer und auf eine Temperatur von 0 bis 5°C zu stellen. Bei dieser Temperatur wird die Diazotierung mittels 32,75 Volumenteilen einer 40%igen wässrigen Natriumnitritlösung durchgeführt. Anschliessend wird ein geringer Ueberschuss an salpetriger Säure mit 0,5 Teilen Amidosulfonsäure zerstört. Sodann werden 77,8 Teile 1-Amino-8-hydroxynaphthalin-3,6-disulfonsäure zugegeben und der Ansatz 4 bis 5 Stunden bei einer Temperatur zwischen 4 und 8°C und einem pH-Wert zwischen 1 und 2 gerührt. Nach dieser Reaktionszeit wird der pH-Wert mit Natriumcarbonat auf 6,0 eingestellt.

In einem separaten Ansatz werden 62 Teile 3-Amino-acetanilid-4-sulfosäure analog den obigen Angaben diazotiert. Die erhaltene Diazoniumsuspension wird zu der hergestellten Lösung der Monoazoverbindung gegeben. Der pH-Wert wird bei 6 bis 7 gehalten und der Reaktionsansatz noch 3 Stunden gerührt. Die hergestellte Diazoverbindung wird durch Eindampfen des Reaktionsansatzes, gegebenenfalls nach einer Klärfiltration, isoliert.

Es wird ein schwarzes, elektrolythaltiges Pulver erhalten, das die Natriumverbindung der Formel

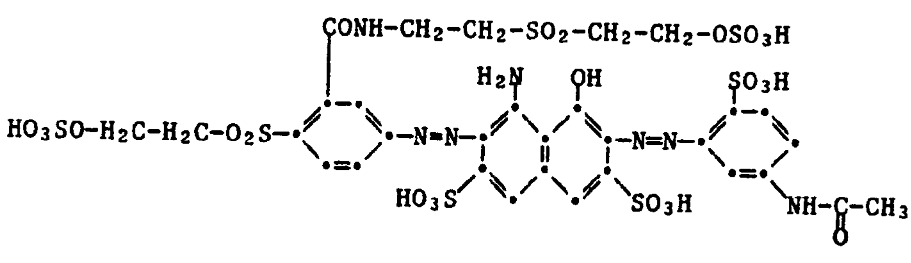

enthält; diese eignet sich sehr gut als Farbstoff zum Färben von Cellulosefasermaterialien nach den in der Technik üblichen, bekannten Färbe- und Druckmethoden und gängigen Fixiermethoden für faserreaktive Farbstoffe; sie liefert auf diesen Materialien marineblaue Farbtöne mit guten Echtheitseigenschaften.

Wir die Farbstofflösung nach beendeter Kupplung 30 Minuten bei Raumtemperatur und pH 9-10 gerührt und anschliessend der pH-Wert mit Salzsäure auf 5,0 zurückgestellt, so erhält man nach dem Sprühtrocknen den Farbstoff der Formel

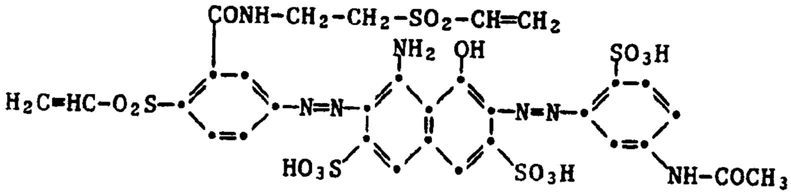

welcher Cellulosefasern in marineblauen Farbtönen mit guten Echtheitseigenschaften färbt.

Beispiele 38-53:

Analog zu Beispiel 37 lassen sich die in der Tabelle 3 genannten Farbstoffe, die Baumwolle jeweils in einer marineblauen Nuance färben, herstellen.

Tabelle 3:

| Bsp. Nr. | Farbstoff |
|---|---|
| 38 | 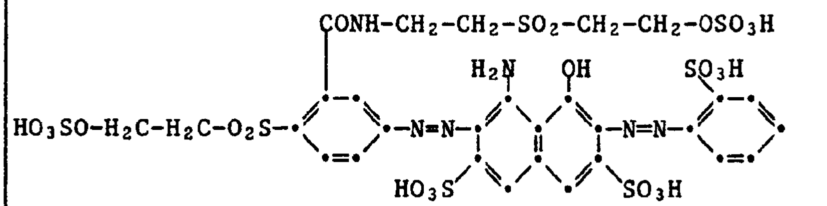 |
| 39 | 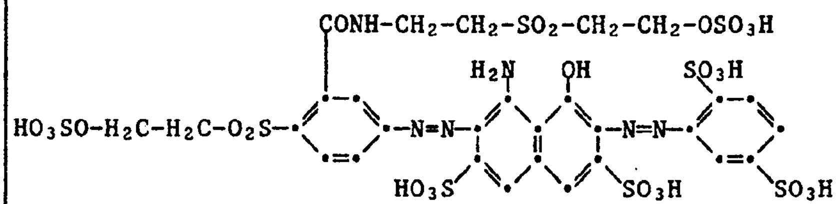 |
| 40 | 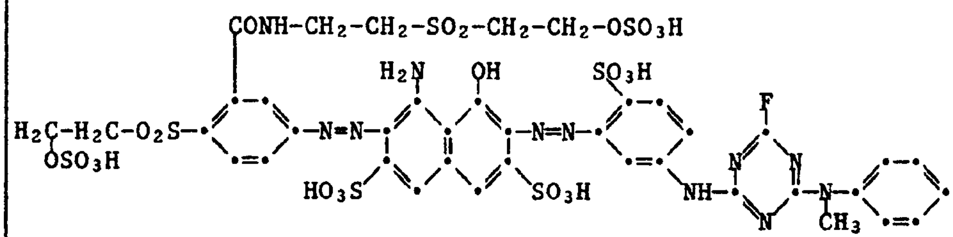 |
| 41 | 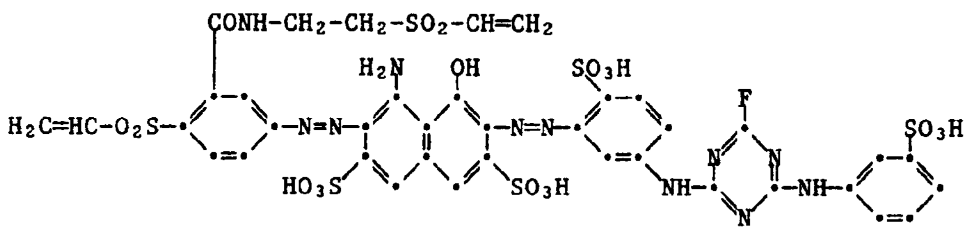 |
| 42 | 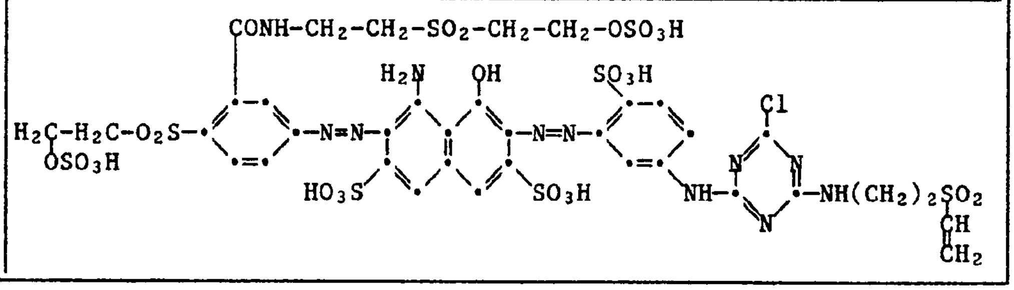 |

Tabelle 3: (Fortsetzung)

| Bsp. Nr. | Farbstoff |
|---|---|
| 43 | 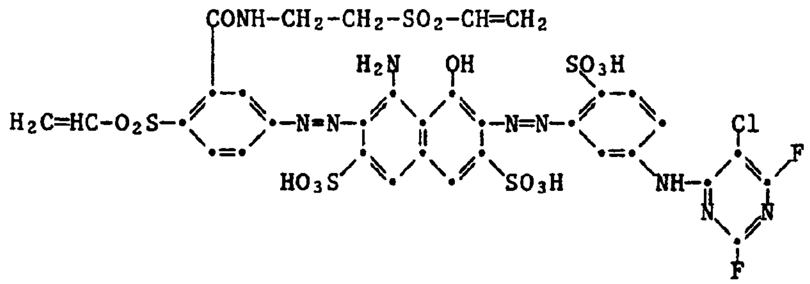 |
| 44 | 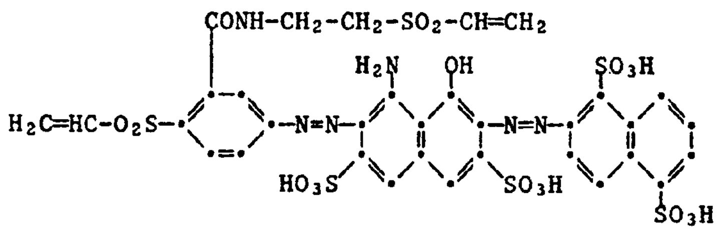 |
| 45 | 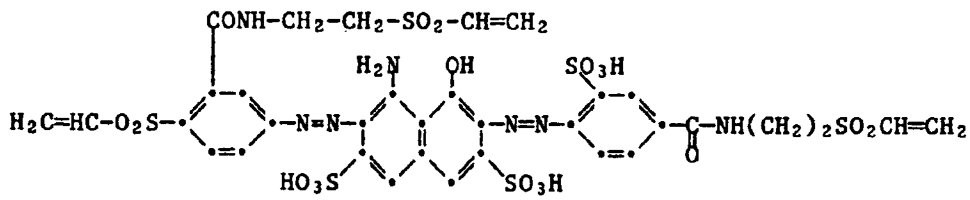 |
| 46 | 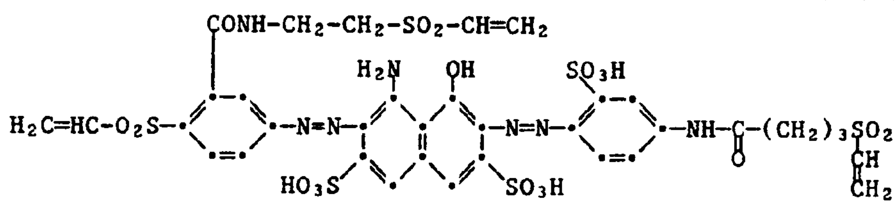 |
| 47 | 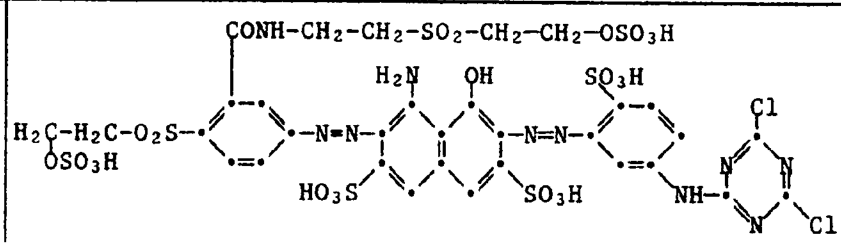 |

Tabelle 3: (Fortsetzung)

| Bsp. Nr. | Farbstoff |
|---|---|
| 48 | 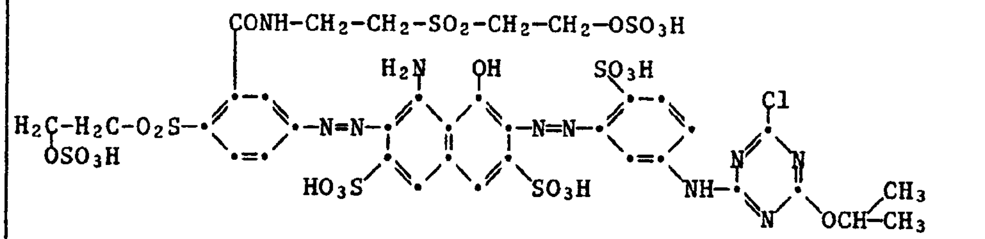 |
| 49 | 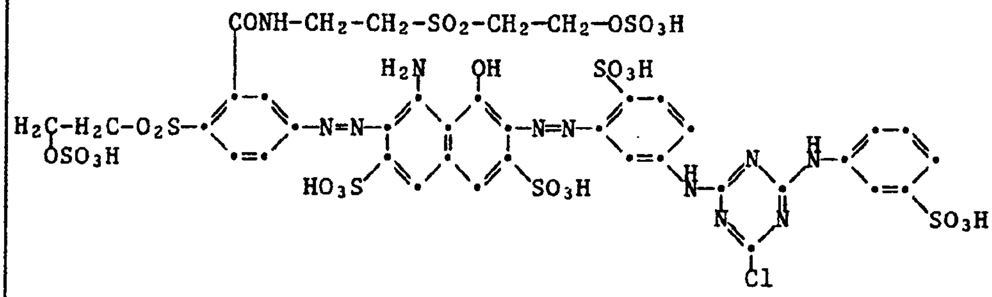 |
| 50 | 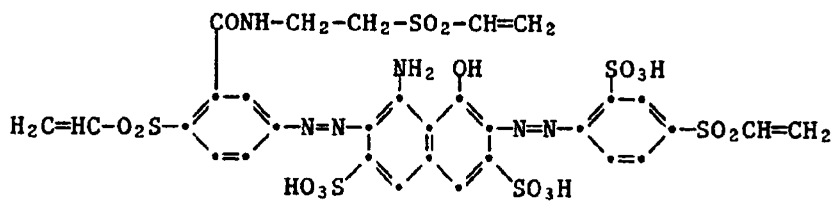 |
| 51 | 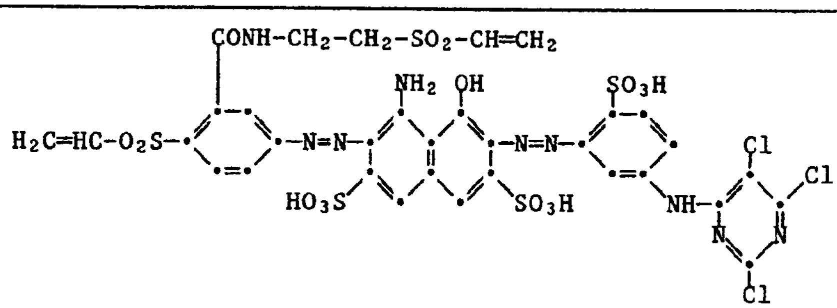 |
| 52 | 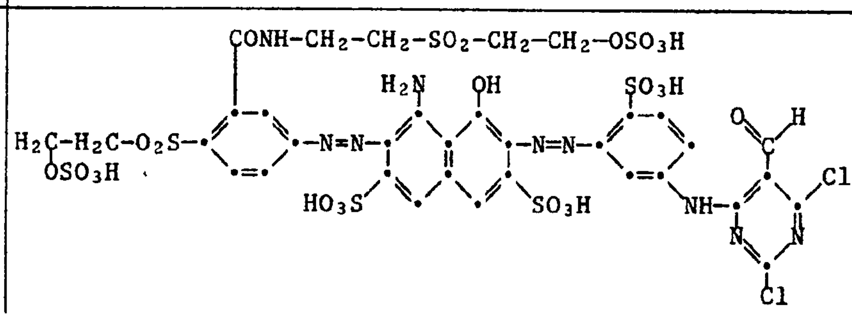 |

Tabelle 3: (Fortsetzung)

| Bsp. Nr. | Farbstoff |
|---|---|
| 53 | 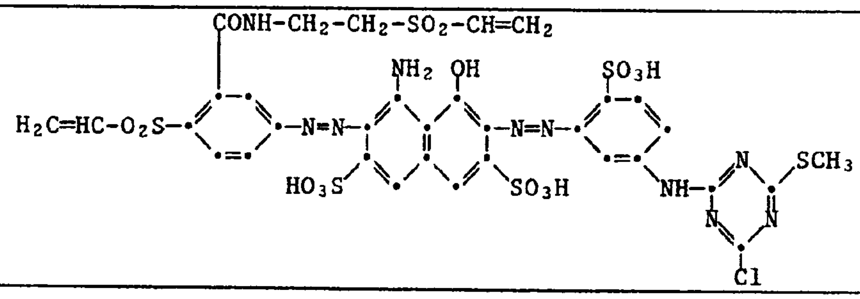 |

Beispiel 54:

16 Teile 1-Amino-8-hydroxynaphthalin-3,6-disulfonsäure werden in 400 Teilen Wasser neutral gelöst. Man stellt die Reaktionslösung auf einen pH-Wert von 4,5 und tropft bei 0 bis 3°C unter gutem Rühren 7,0 Teile Cyanurfluorid zu. Der dabei freiwerdende Fluorwasserstoff wird durch dosierte Zugabe von 2n Natriumhydroxydlösung neutralisiert. Sobald keine freie 1-Amino-8-hydroxynaphthalin-3,6-disulfonsäure mehr nachweisbar ist, werden 27 Teile der Verbindung der Formel (32) gemäss Beispiel 5 in 50 Teilen Wasser zugegeben. Man lässt die Temperatur auf 20 bis 25°C steigen und hält den pH-Wert der Reaktionslösung bei 4 bis 6,5. Nach beendigter Kondensation wird das Farbstoffzwischenprodukt bei 0 bis 10°C mit 15 Teilen diazotierter 2-Aminonaphthalin-1,5-disulfonsäure gekuppelt. Anschliessend lässt man das Reaktionsgemisch 30 Minuten lang bei pH 10 und Raumtemperatur rühren. Dann wird der pH-Wert mit Salzsäure auf 7,0-7,5 zurückgestellt. Nach Aussalzen mit KCl isoliert man den Farbstoff der Formel

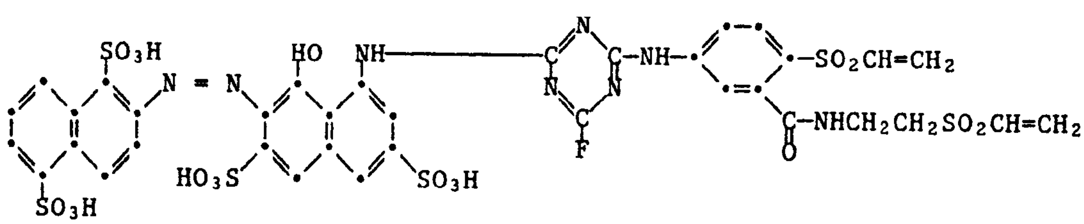

als dunkelrotes Pulver, welches Baumwolle in blaustichigen Rottönen mit guten Echtheiten färbt.

Beispiel 55-67:

Analog zu Beispiel 54 lassen sich die in der Tabelle 4 genannten Farbstoffe, die Baumwolle jeweils in der genannten Nuance färben, herstellen.

Tabelle 4:

| Beispiel Nr. | Farbstoff | Nuance auf Baumwolle |
|---|---|---|
| 55 | 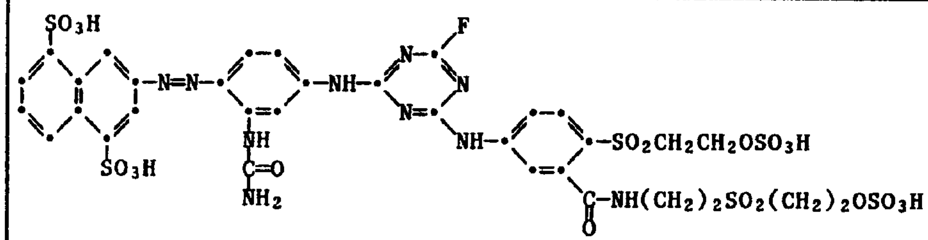 | goldgelb |
| 56 | 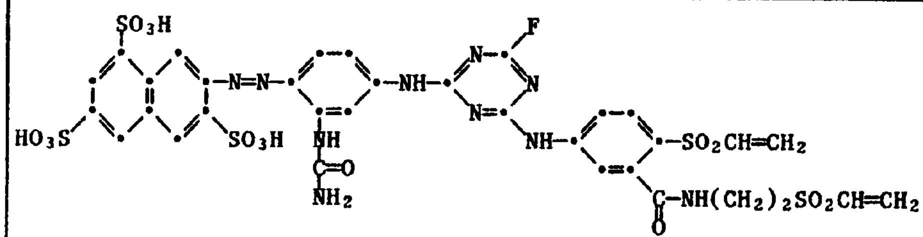 | goldgelb |
| 57 | 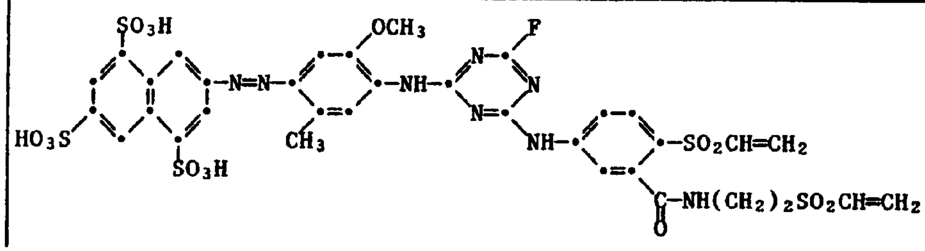 | goldgelb |

Tabelle 4: (Fortsetzung)

| Beispiel Nr. | Farbstoff | Nuance auf Baumwolle |
|---|---|---|
| 58 | 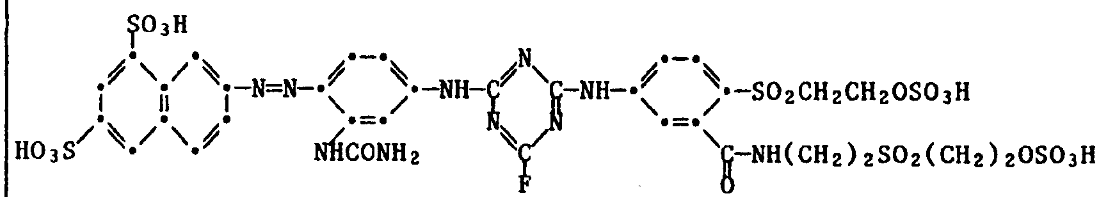 | goldgelb |
| 59 | 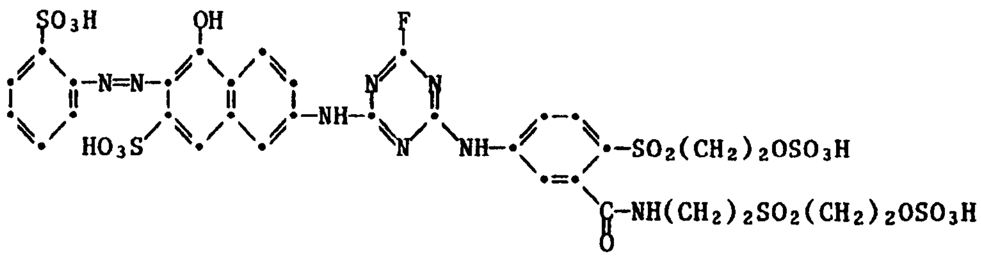 | orange |
| 60 | 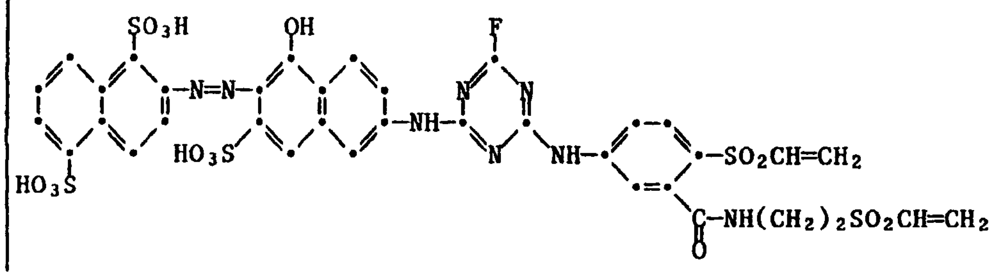 | orange |

Tabelle 4: (Fortsetzung)

| Beispiel Nr. | Farbstoff | Nuance auf Baumwolle |
|---|---|---|
| 61 | 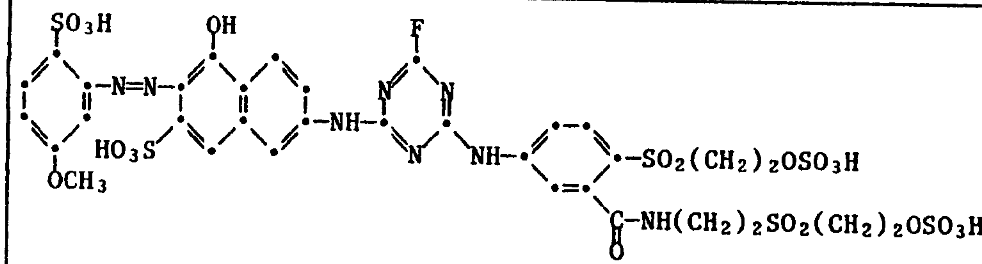 | scharlach |
| 62 | 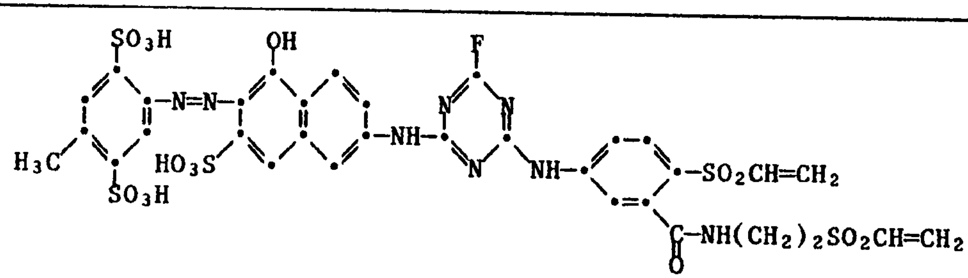 | orange |

Tabelle 4: (Fortsetzung)

| Beispiel Nr. | Farbstoff | Nuance auf Baumwolle |
| --- | --- | --- |
| 63 | 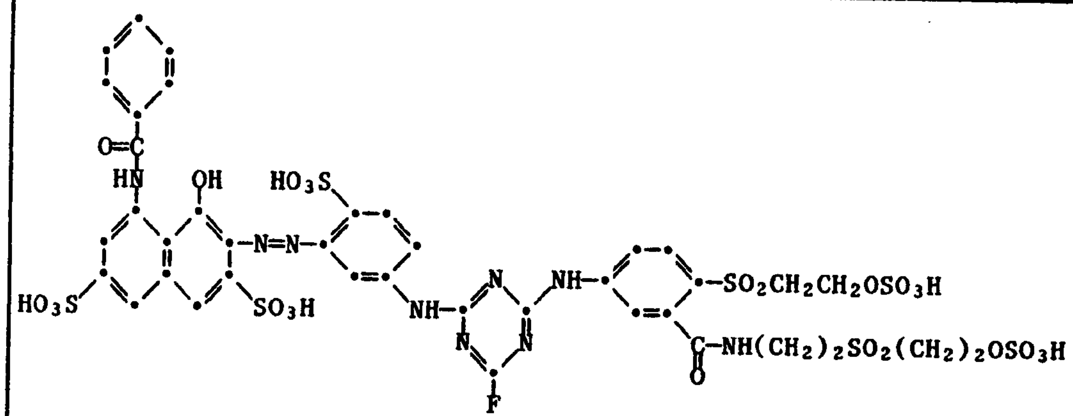 | rot |
| 64 | 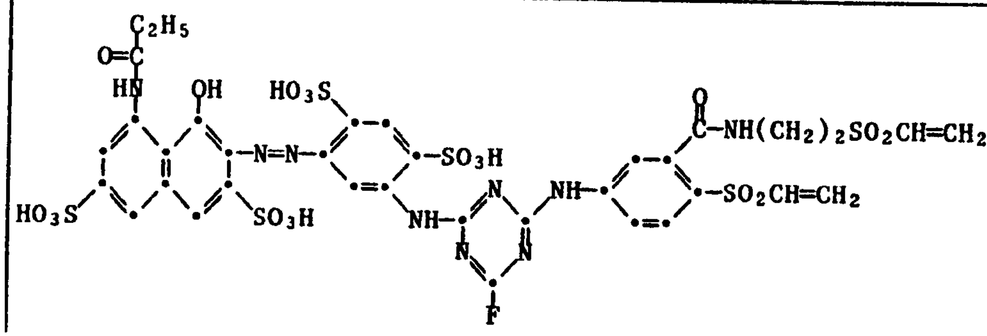 | rot |

Tabelle 4: (Fortsetzung)

| Beispiel Nr. | Farbstoff | Nuance auf Baumwolle |
|---|---|---|
| 65 | 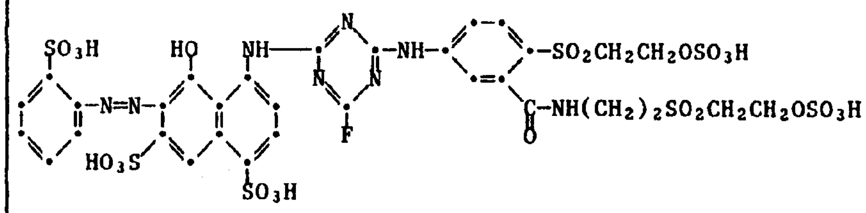 | rot |
| 66 | 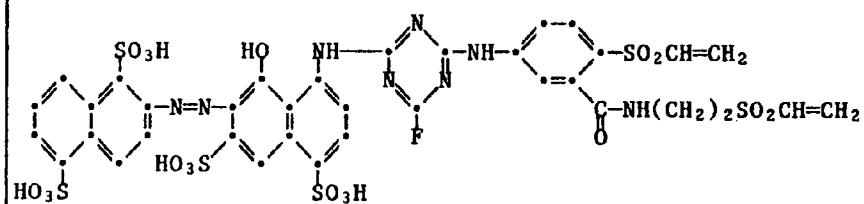 | blaustichig rot |
| 67 | 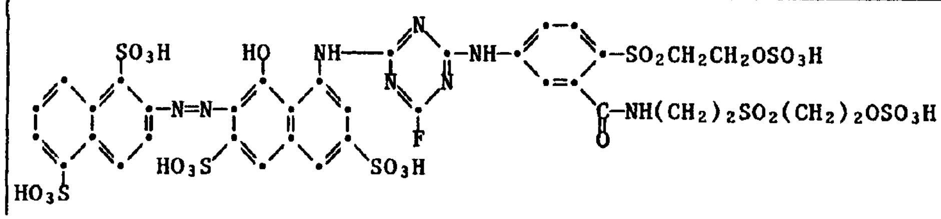 | blaustichig rot |

Beispiel 68:

95 Teile Cyanurchlorid werden in bekannter Weise mit 1-Amino-8-hydroxynaphthalin-3,6-disulfonsäure in Wasser umgesetzt. Zu diesem Produkt wird eine frisch diazotierte Lösung von 1-Aminobenzol-2-sulfonsäure gegeben und der pH-Wert auf 4-4,5 eingestellt. Nach beendeter Kupplung werden 270 Teile der Verbindung der Formel (32) gemäss Beispiel 5, gelöst in 800 Teilen Wasser, zugegeben und bei pH 7-7,5 und 35°C zur Reaktion gebracht. Nun wird die Lösung bei pH 10 und Raumtemperatur 30 Minuten lang gerührt. Der pH-Wert wird mit Salzsäure auf 6,5-7,0 zurückgestellt. Nach dem Aussalzen mit KCl erhält man 500 Teile des Farbstoffes der Formel

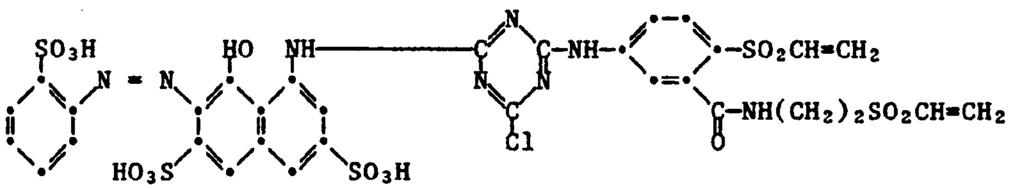

welcher Baumwolle in echten Rottönen färbt.

Beispiel 69-81:

Analog zu Beispiel 68 lassen sich die in der Tabelle 5 genannten Farbstoffe, die Baumwolle jeweils in der genannten Nuance färben, herstellen.

Tabelle 5:

| Beispiel Nr. | Farbstoff | Nuance auf Baumwolle |
|---|---|---|
| 69 | 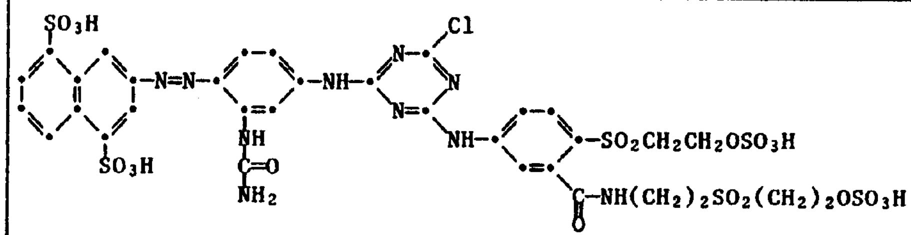 | goldgelb |
| 70 | 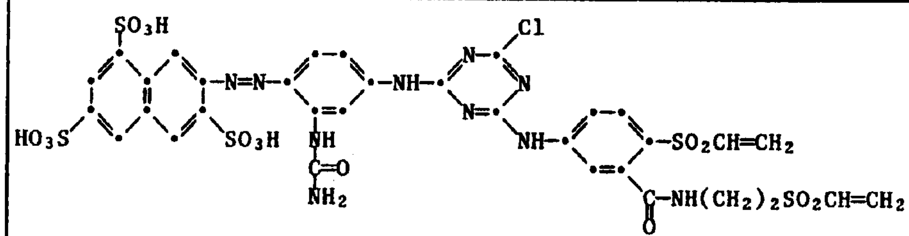 | goldgelb |
| 71 | 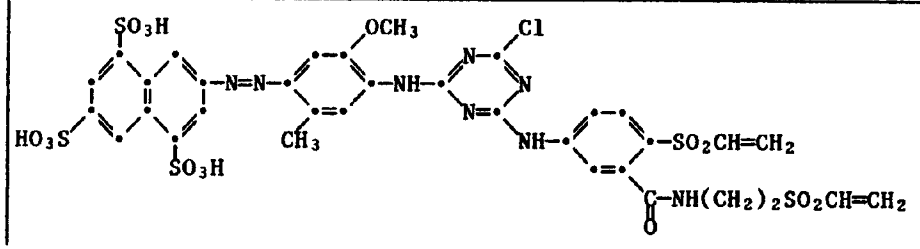 | goldgelb |

Tabelle 5: (Fortsetzung)

| Beispiel Nr. | Farbstoff | Nuance auf Baumwolle |
|---|---|---|
| 72 | 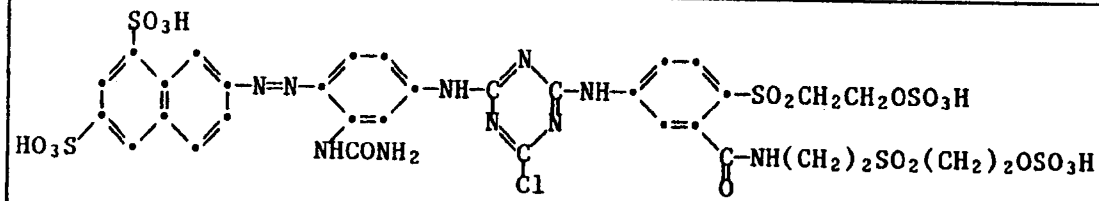 | goldgelb |
| 73 | 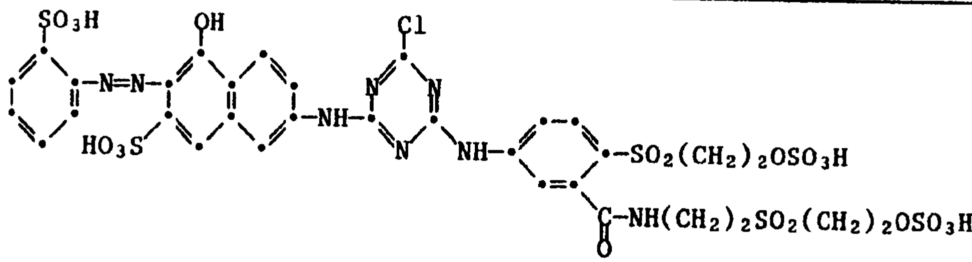 | orange |
| 74 | 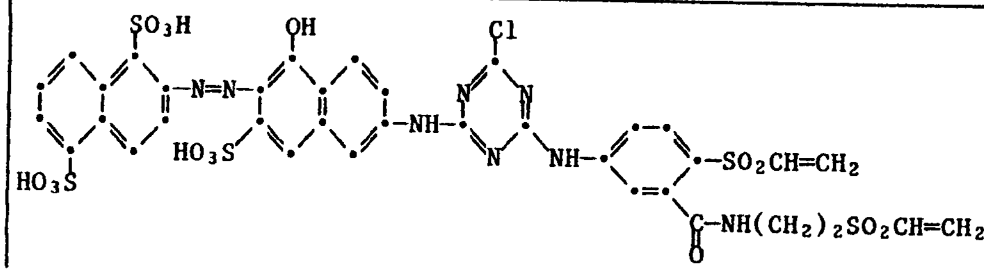 | orange |

<u>Tabelle 5:</u> (Fortsetzung)

| Beispiel Nr. | Farbstoff | Nuance auf Baumwolle |
|---|---|---|
| 75 | 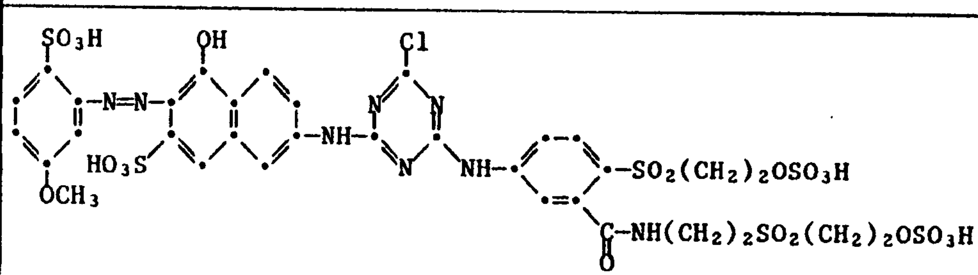 | scharlach |
| 76 | 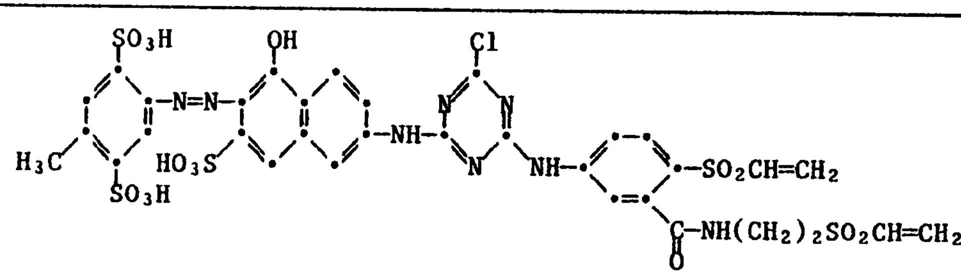 | orange |

Tabelle 5: (Fortsetzung)

| Beispiel Nr. | Farbstoff | Nuance auf Baumwolle |
|---|---|---|
| 77 | 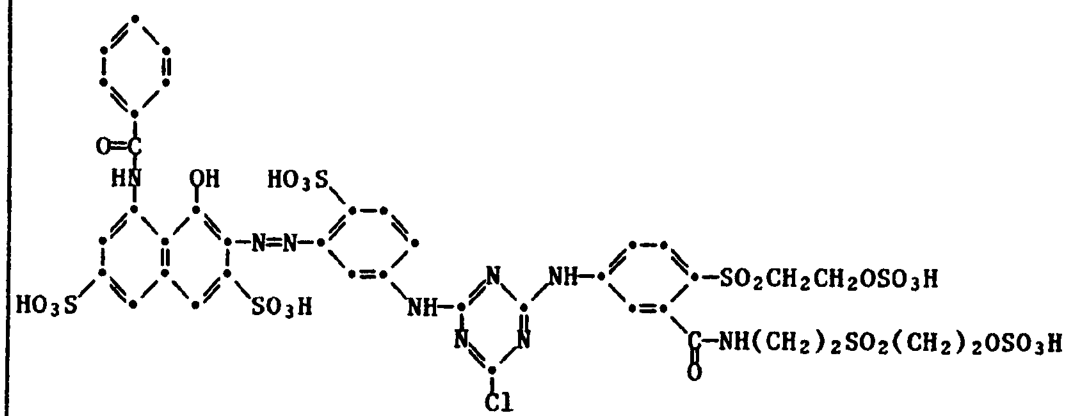 | rot |
| 78 | 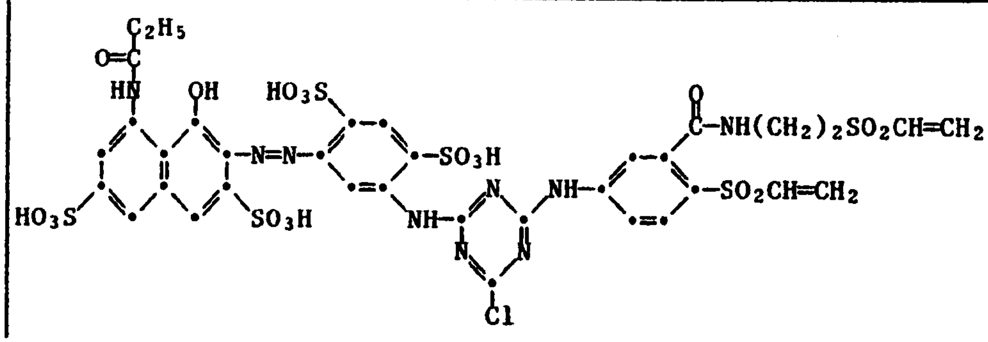 | rot |

Tabelle 5: (Fortsetzung)

| Beispiel Nr. | Farbstoff | Nuance auf Baumwolle |
|---|---|---|
| 79 | 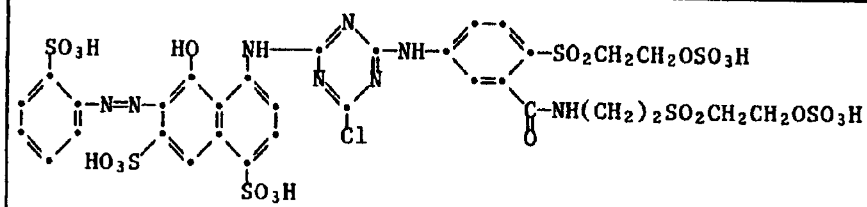 | rot |
| 80 | 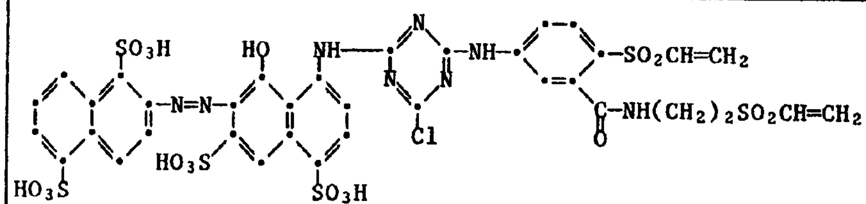 | blaustichig rot |
| 81 | 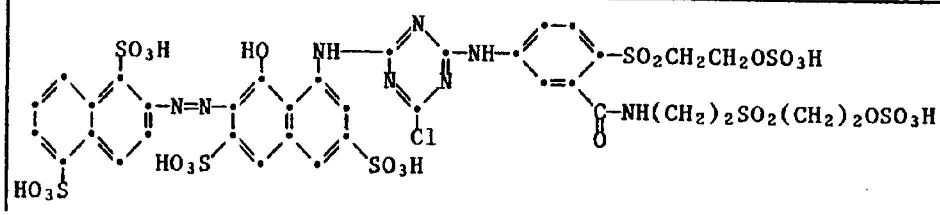 | blaustichig rot |

Beispiel 82:

81 g (0,15 mol) der Verbindung der Formel (32) gemäss Beispiel 5 werden in 250 ml Eiswasser gelöst und dazu 0,1 mol Kupferphthalocyanintrisulfochloridmonosulfonsäure, welches durch Chlorsulfonierung von Kupferphthalocyanin in bekannter Art und Weise gewonnen wird, zugegeben. Das Gemisch wird homogen wird homogen verrührt und der pH-Wert mit 2n Ammoniaklösung auf 5,0 eingestellt und gehalten. Man lässt nun innerhalb von 12 Stunden die Temperatur auf 20°C ansteigen und rührt dann noch 6 Stunden bei 50°C nach.

Die erhaltene Farbstofflösung wird mit Kochsalz ausgesalzen und der pH-Wert auf 3,5 eingestellt. Anschliessend wird der Farbstoff abfiltriert, gewaschen und getrocknet. Der Farbstoff entspricht der Formel

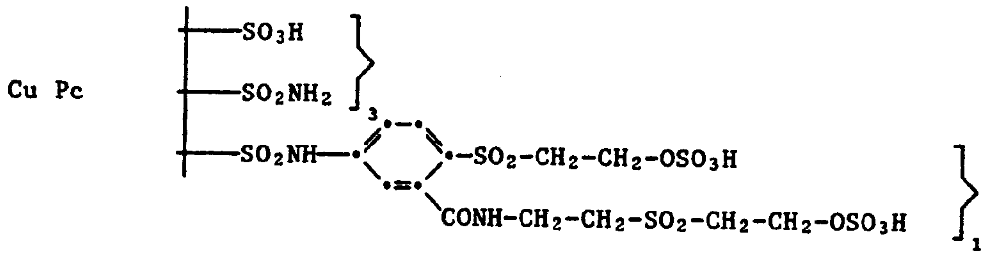

und ergibt auf Cellulosefasern türkisblaue Färbungen mit guten Echtheitseigenschaften.

Färbevorschrift I

2 Teile des gemäss Beispiel 6 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxid und 20 g kalzinierte Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 20 erhaltenen Reaktivfarbstoffes werden in 400 Teilen Wasser gelöst; dazu gibt man 1500 Teile einer Lösung, die pro Liter 53 g Natriumchlorid enthält. In diese Färbebad geht man bei 35°C mit 100 Teilen eines Baumwollgewebes ein. Nach 20 Minuten werden 100 Teile einer Lösung, die pro Liter 16 g Natriumhydroxid und 20 g kalzinierte Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 21 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 6 erhaltenen Reaktivfarbstoffes werden in 50 Teilen Wasser gelöst. Dazu gibt man 50 Teile einer Lösung, die pro Liter 5 g Natriumhydroxid und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel

kochend geseift, nochmals gespült und getrocknet.

Färbevorschrift V

6 Teile des gemäss Beispiel 16 erhaltenen Reaktivfarbstoffes werden in 50 Teilen Wasser gelöst. Dazu gibt man 50 Teile einer Lösung, die pro Liter 16 g Natriumhydroxid und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 13 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxid und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 6 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 7 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

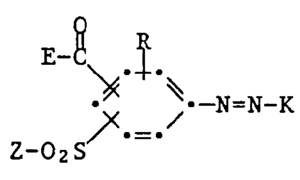

(2)

oder der Formel

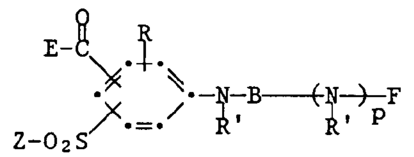 (14)

sowie Metallkomplexe von Farbstoffen der Formel (2), worin R Wasserstoff, Halogen, Hydroxy oder Sulfo ist, Z einen Rest der Formel $-CH=CH_2$ oder $-CH_2-CH_2-Y$ bedeutet, Y einen unter alkalischen Bedingungen abspaltbaren anorganischen oder organischen Rest darstellt, R′ Wasserstoff oder unsubstituiertes oder durch -COOH, -CN, -OH oder $-SO_3H$ substituiertes $C_1-C_4$-Alkyl ist, E ein Rest der Formel

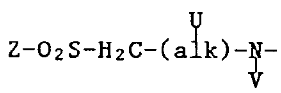 (Ia),

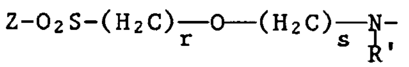 (Ib),

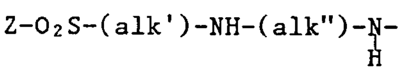 (Ic),

oder

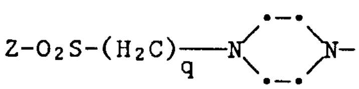 (Id),

ist, worin R′ und Z die oben angegebene Bedeutung haben, alk, alk′ und alk″ unabhängig voneinander einen $C_1-C_6$-Alkylenrest darstellen, U für Wasserstoff, Halogen, Hydroxy, Sulfato, $C_1-C_4$-Alkanoyloxy, Cyano, Carboxy, $C_1-C_4$-Alkoxycarbonyl, Carbamoyl oder einen Rest $-SO_2-Z$, worin Z die oben angegebene Bedeutung hat, steht, V Wasserstoff, gegebenenfalls substituiertes $C_1-C_4$-Alkyl oder ein Rest der Formel

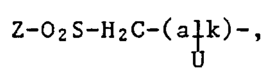

worin Z, alk und U die oben angegebene Bedeutung haben, ist und q, r und s unabhängig voneinander eine ganze Zahl von 1 bis 6 bedeuten,
K der Rest einer Kupplungskomponente der Benzol- oder Naphthalinreihe oder der heterocyclischen Reihe ist,
B ein Brückenglied darstellt,
F der Rest eines mindestens eine $-SO_3H$- Gruppe enthaltenden metallfreien oder metallhaltigen Mono- oder Disazofarbstoffs, der Rest eines 1-Amino- oder 1-Anilinoanthrachinons, der Rest eines Sulfophthalocyaninfarbstoffs oder der Rest eines Formazan-, Phenazin-, Oxazin- oder Nitroarylfarbstoffes ist und p 0 oder 1 bedeutet.

2. Reaktivfarbstoffe gemäss Anspruch 1 der Formel

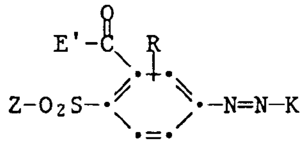 (2a)

oder

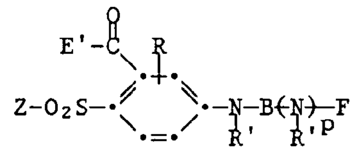

(14a),

worin E' ein Rest der Formel

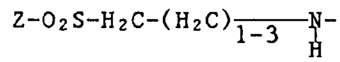

oder

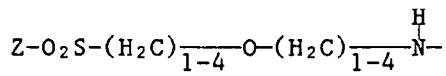

ist und B, F, K, R, R', Z und p jeweils die im Anspruch 1 angegebene Bedeutung haben.

3. Reaktivfarbstoffe gemäss einem der Ansprüche 1 oder 2 der Formel (2) bzw. (2a), dadurch gekennzeichnet, dass K ein Benzol-, Naphthalin-, Naphthylazobenzol-, Phenylazonaphthalin-, Pyrazolon-, Phenylpyrazolon-, Pyrazol- oder Pyridonrest ist.

4. Reaktivfarbstoffe gemäss einem der Ansprüche 1 bis 3 der Formel (2) bzw. (2a), dadurch gekennzeichnet, dass K unsubstituiert oder durch $C_1$-$C_4$-Alkyl, $C_1$-$C_4$-Alkoxy, Amino, im Alkylrest gegebenenfalls weitersubstituiertes N-Mono- oder N,N-Di-$C_1$-$C_4$-Alkylamino, Phenylamino, $C_1$-$C_4$-Alkanoylamino, Benzoylamino, $C_1$-$C_4$-Alkoxycarbonyl, Nitro, Cyano, Trifluormethyl, Halogen, Hydroxy, Carboxy, Sulfo, Sulfomethyl, Sulfamoyl, N-Mono- oder N,N-Di-$C_1$-$C_4$-Alkylsulfamoyl, Carbamoyl und/oder N-Mono- oder N,N-Di-$C_1$-$C_4$-Alkylcarbamoyl substituiert ist.

5. Reaktivfarbstoffe gemäss einem der Ansprüche 1 bis 4 der Formel (2) bzw. (2a), dadurch gekennzeichnet, dass K durch eine Sulfogruppe, eine aliphatischen Sulfatorest oder einen aliphatischen sulfatierbaren Rest substituiert ist und darüberhinaus gegebenenfalls durch einen oder mehrere der im Anspruch 4 genannten Reste weitersubstituiert ist.

6. Reaktivfarbstoffe gemäss Anspruch 1 der Formel

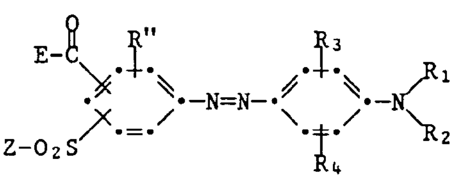

(3) ,

worin E und Z die im Anspruch 1 angegebene Bedeutung hat, R'' Wasserstoff oder Chlor bedeutet, $R_1$ und $R_2$ unabhängig voneinander für Wasserstoff, unsubstituiertes oder durch -OH, $-OSO_3H$, $-OCOCH_3$, -CN oder Halogen substituiertes $C_1$-$C_4$-Alkyl oder Phenyl stehen und $R_3$ und $R_4$ unabhängig voneinander Wasserstoff, Halogen, $C_1$-$C_4$-Alkyl, $C_1$-$C_4$-Alkoxy, Trifluormethyl, $C_1$-$C_4$-Alkanoylamino oder Sulfo bedeuten.

7. Reaktivfarbstoffe gemäss Anspruch 1 der Formel

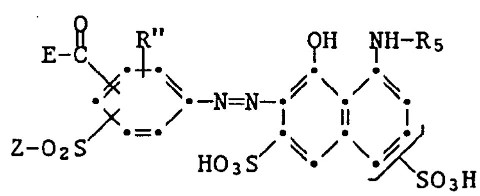

(4)

worin E, Z und R'' die im Anspruch 6 angegebene Bedeutung haben und $R_5$ $C_1$-$C_4$-Alkanoyl, Benzoyl oder ein Rest der Formel

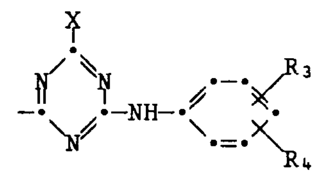

(5)

ist, wobei X für Chlor oder Fluor steht und $R_3$ und $R_4$ jeweils unabhängig die im Anspruch 6 angegebene Bedeutung haben.

8. Reaktivfarbstoffe gemäss Anspruch 1 der Formel

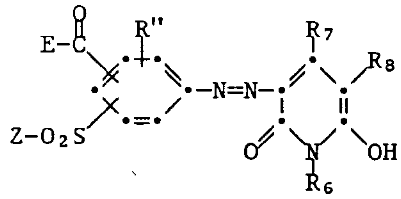

(6) ,

worin E, Z und R″ die im Anspruch 6 angegebene Bedeutung haben, $R_6$ und $R_7$ unabhängig voneinander Wasserstoff, $C_1$-$C_4$-Alkyl oder Phenyl bedeuten und $R_8$ Wasserstoff, Cyano, Carbamoyl oder Sulfomethyl ist.

9. Reaktivfarbstoffe gemäss Anspruch 1 der Formel

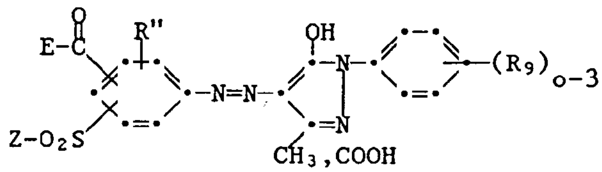

worin E, Z und R″ die im Anspruch 6 angegebene Bedeutung haben und $R_9$ für 0 bis 3 gleiche oer verschiedene Substituenten, ausgewählt aus der Gruppe Chlor, Methyl, Methoxy, Carboxy oder Sulfo steht.

10. Reaktivfarbstoffe gemäss Anspruch 1 der Formel

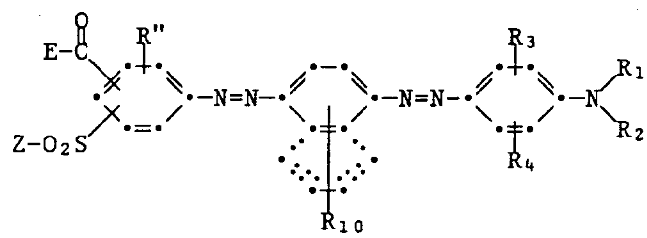

(8),

worin E, Z, R″, $R_1$, $R_2$, $R_3$ und $R_4$ die im Anspruch 6 angegebene Bedeutung haben und $R_{10}$ $C_1$-$C_4$-Alkyl, $C_1$-$C_4$-Alkoxy, Halogen oder Sulfo bedeutet.

11. Reaktivfarbstoffe gemäss Anspruch 1 der Formel

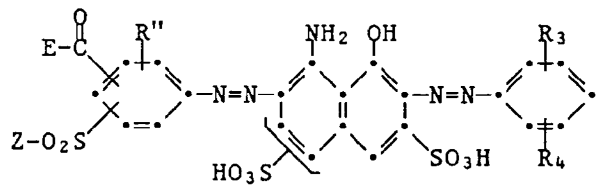

(9) ,

worin E, Z, R″, $R_3$ und $R_4$ die im Anspruch 6 angegebene Bedeutung haben.

12. Verfahren zur Herstellung von Reaktivfarbstoffen der Formel (2) gemäss Anspruch 1, dadurch gekennzeichnet, dass man eine Diazokomponente der Formel

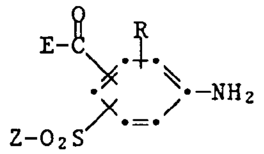

(1c),

worin E, Z und R die im Anspruch 1 angegebene Bedeutung haben, oder ihr Vorprodukt mit einer Kupplungskomponente der Formel

H-K (10),

worin K die im Anspruch 1 angegebene Bedeutung hat, durch Diazotierung und Kupplung zu Reaktivfarbstoffen der Formel (2) umsetzt, oder die erhaltenen Zwischenprodukte in die gewünschten Endfarbstoffe überführt und gegebenenfalls eine weitere Umwandlungsreaktion anschliesst.

13. Reaktivfarbstoffe gemäss einem der Ansprüche 1 oder 2 der Formel (14), dadurch gekennzeichnet, dass p 0 ist und B eine direkte Bindung oder eine Gruppe $-CH_2-$, -CO- oder $-SO_2-$ darstellt.

14. Reaktivfarbstoffe gemäss Anspruch 13 der Formel

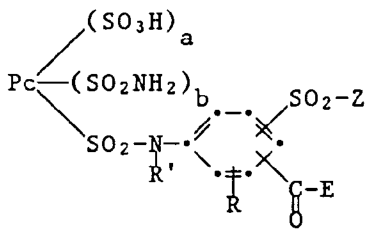

(20)

worin Pc der Rest eines metallhaltigen oder metallfreien Phthalocyaninkerns ist, a und b ganze oder gebrochene Zahlen von 1 bis 3 sind, wobei a und b zusammen 3,0 ergeben, und E, R, R′ und Z die im Anspruch 1 angegebene Bedeutung haben.

15. Reaktivfarbstoffe gemäss einem der Ansprüche 1 oder 2 der Formel (14), dadurch gekennzeichnet, dass p 1 und B ein weiterer Reaktivrest ist.

16. Reaktivfarbstoffe gemäss Anspruch 15, dadurch gekennzeichnet, dass B ein Reaktivrest der Formel

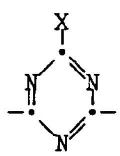

(15b),

worin X Halogen bedeutet, ist.

17. Reaktivfarbstoffe gemäss Anspruch 15 der Formel

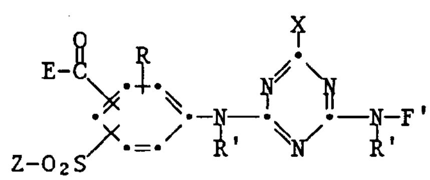

(16)

worin E, Z, R und R′ die im Anspruch 1 angegebene Bedeutung haben, X Halogen bedeutet und F′ der Rest eines Mono- oder Disazofarbstoffs der Formel

D-N=N-(M-N=N-)$_n$K- (17a)

oder der Formel

-D-N=N-(M-N=N-)$_n$K (17b)

ist, worin D den Rest einer Diazokomponente der Benzol- oder Naphthalinreihe darstellt, M eine Mittelkomponente der Benzol- oder Naphthalinreihe ist, K den Rest einer Kupplungskomponente der Benzol- oder Naphthalinreihe oder der heterocyclischen Reihe bedeutet und n 0 oder 1 ist.

18. Reaktivfarbstoffe gemäss Anspruch 17 der Formel

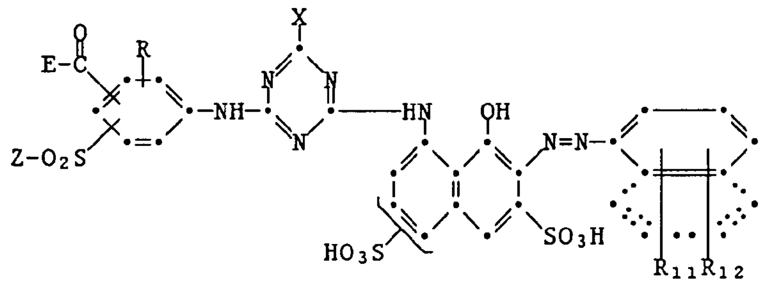 (18),

worin E, Z und R die im Anspruch 1 angegebene Bedeutung haben, X Halogen bedeutet und $R_{11}$ und $R_{12}$ unabhängig voneinander für Wasserstoff, Sulfo oder Nitro stehen.

19. Reaktivfarbstoffe gemäss Anspruch 15 der Formel

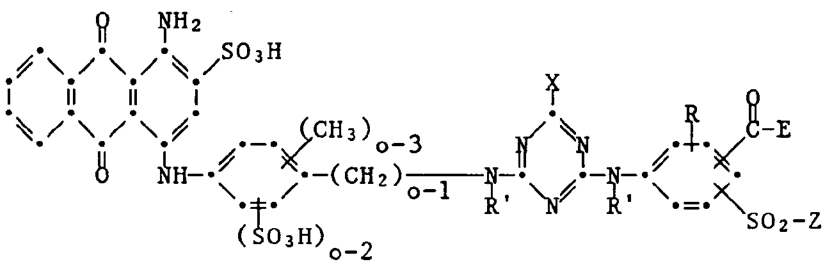 (21),

worin Z, R und R′ die im Anspruch 1 angegebene Bedeutung haben und X Halogen ist.

20. Reaktivfarbstoffe gemäss Anspruch 15 der Formel

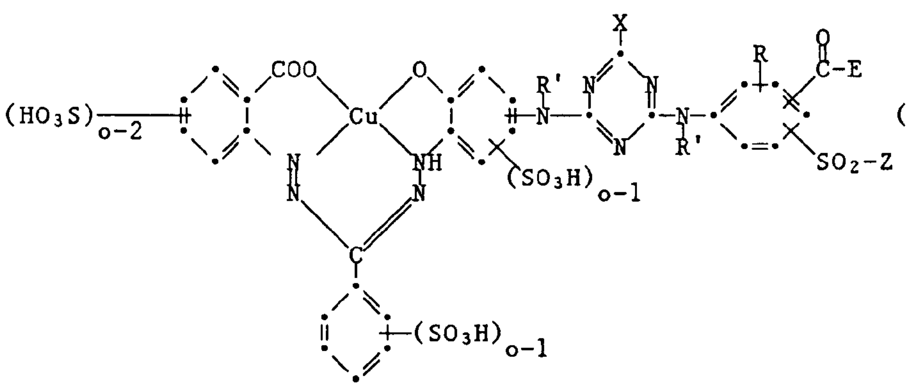 (22),

worin E, R, R′ und Z die im Anspruch 1 angegebene Bedeutung haben und X Halogen bedeutet.

21. Verfahren zur Herstellung von Verbindungen der Formel (14) gemäss Anspruch 1, worin p 0 ist, dadurch gekennzeichnet, dass man eine Verbindung der Formel

F - B - Hal (23),

worin F und B die im Anspruch 1 angegebene Bedeutung haben und Hal Halogen bedeutet, oder Farbstoffvorprodukte mit einer Verbindung der Formel

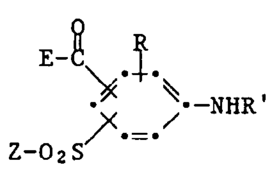 (1),

worin E, R, R′ und Z jeweils die im Anspruch 1 angegebene Bedeutung haben, umsetzt.

22. Verfahren zur Herstellung von Verbindungen der Formel (14) gemäss Anspruch 1, worin p 1 ist, dadurch

gekennzeichnet, dass man einen Farbstoff der Formel

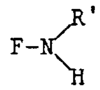

(24)

oder Farbstoffvorprodukte zunächst mit einer Verbindung der Formel

Hal-B-Hal (25),

zur Verbindung der Formel

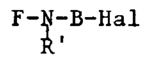

(26)

umsetzt und diese anschliessend mit einer Verbindung der Formel (1) gemäss Anspruch 21 zum Reaktivfarbstoff der Formel (14) reagieren lässt, wobei F, B und R′ jeweils die im Anspruch 1 angegebene Bedeutung haben und Hal Halogen bedeutet.

23. Verbindungen der Formel

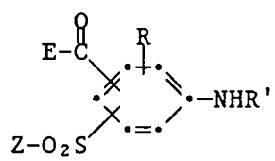

(1),

worin E, Z, R und R′ die im Anspruch 1 angegebene Bedeutung haben.

24. Verbindungen gemäss Anspruch 23 der Formel

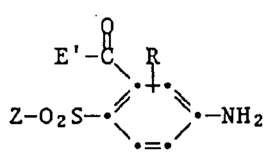

(1a),

worin E′ ein Rest der Formel

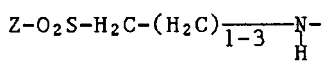

(Ia')

oder

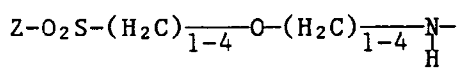

(Ib')

ist und R und Z die im Anspruch 1 angegebene Bedeutung haben.

25. Verfahren zur Herstellung von Verbindungen der Formel (1) gemäss Anspruch 23 dadurch gekennzeichnet, dass man eine Verbindung der Formel

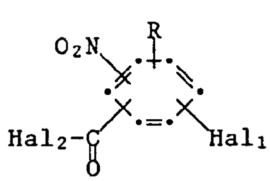

(11)

worin R die im Anspruch 1 angegebene Bedeutung hat und $Hal_1$ und $Hal_2$ unabhängig voneinander Halogen

bedeuten, zunächst mit einem Amin der Formel

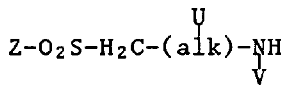

(Ia*),

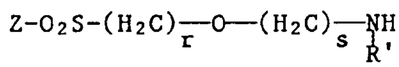

(Ib*),

$Z-O_2S-(alk')-NH-(alk'')-NH_2$ (Ic*),

oder

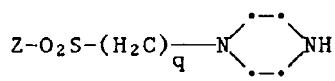

(Id*),

worin Z, U, V, R′, alk, alk′, alk″, r, s und q die im Anspruch 1 angegebene Bedeutung haben, und dann mit 2-Mercaptoethanol umsetzt, die erhaltene Verbindung zur Di-Sulfonylverbindung oxidiert, die Nitrogruppe zur Aminogruppe reduziert, gegebenenfalls eine Abgangsgruppe einführt und/oder gegebenenfalls die Aminogruppe alkyliert.

26. Verwendung der Reaktivfarbstoffe gemäss Anspruch 1 zum Färben und Bedrucken von cellulosehaltigen Fasermaterialien.

27. Verwendung gemäss Anspruch 26 zum Färben und Bedrucken von Baumwolle.

## Claims

1. A reactive dye of the formula

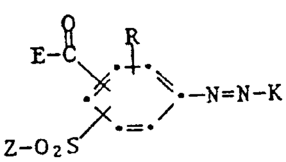

(2)

or of the formula

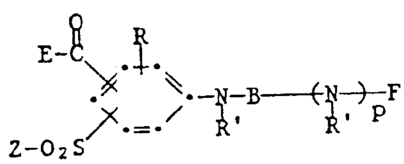

(14)

or a metal complex of a dye of the formula (2) in which R is hydrogen, halogen, hydroxyl or sulfo, Z is a radical of the formula $-CH=CH_2$ or $-CH_2-CH_2-Y$, Y is an inorganic or organic radical which is detachable under alkaline conditions, R′ is hydrogen or $C_1$-$C_4$alkyl which is unsubstituted or substituted by -COOH, -CN, -OH or $-SO_3H$, and E is a radical of the formula

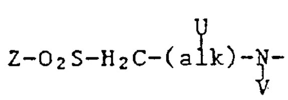

(Ia),

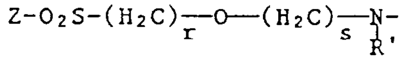

(Ib),

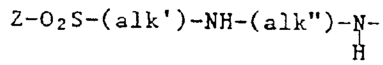

(Ic),

or

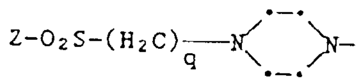

(Id)

in which R′ and Z are as defined above, alk, alk′ and alk″ independently of one another are a $C_1$-$C_6$alkylene radical, U is hydrogen, halogen, hydroxyl, sulfato, $C_1$-$C_4$alkanoyloxy, cyano, carboxyl, $C_1$-$C_4$alkoxycarbonyl, carbamoyl or a radical $-SO_2-Z$ in which Z is as defined above, V is hydrogen, substituted or unsubstituted $C_1$-$C_4$alkyl or a radical of the formula

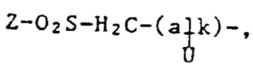

in which Z, alk and U are as defined above, and q, r and s independently of one another are an integer from 1 to 6,
K is the radical of a coupling component of the benzene or naphthalene series or of the heterocyclic series,
B is a bridge member and
F is the radical of a metal-free or metal-containing monoazo or disazo dye containing at least one $-SO_3H$- group, the radical of a 1-aminoanthraquinone or 1-anilinoanthraquinone, the radical of a sulfophthalocyanine dye or the radical of a formazan, phenazine, oxazine or nitroaryl dye and p is 0 or 1.

2. A reactive dye according to claim 1, of the formula

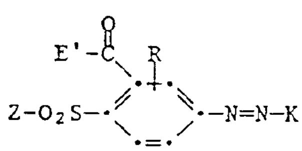

(2a)

or

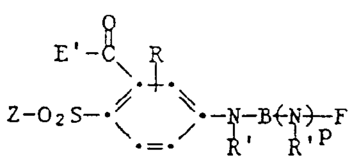

(14a),

in which E′ is a radical of the formula

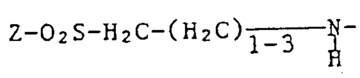

or

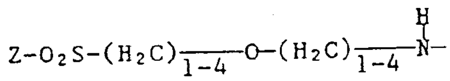

and B, F, K, R, R′, Z and p are each as defined in claim 1.

3. A reactive dye according to either of claims 1 and 2, of the formula (2) or (2a), wherein K is a benzene, naphthalene, naphthylazobenzene, phenylazonaphthalene, pyrazolone, phenylpyrazolone, pyrazole or pyridone radical.

4. A reactive dye according to any one of claims 1 to 3, of the formula (2) or (2a), wherein K is unsubstituted or substituted by $C_1$-$C_4$alkyl, $C_1$-$C_4$alkoxy, amino, N-mono-$C_1$-$C_4$alkylamino or N,N-di-$C_1$-$C_4$alkylamino which is unsubstituted or further substituted in the alkyl radical, phenylamino, $C_1$-$C_4$alkanoylamino, benzoylamino, $C_1$-$C_4$alkoxycarbonyl, nitro, cyano, trifluoromethyl, halogen, hydroxyl, carboxyl, sulfo, sulfomethyl, sulfamoyl, N-mono-$C_1$-$C_4$alkylsulfamoyl, N,N-di-$C_1$-$C_4$alkylsulfamoyl, carbamoyl and/or N-mono-$C_1$-$C_4$alkylcarbamoyl or N,N-di-$C_1$-$C_4$alkylcarbamoyl.

5. A reactive dye according to any one of claims 1 to 4, of the formula (2) or (2a), wherein K is substituted by a sulfo group, an aliphatic sulfato radical or an aliphatic sulfatable radical and can, in addition, be further substituted by one or more of the radicals mentioned in claim 4.

6. A reactive dye according to claim 1, of the formula

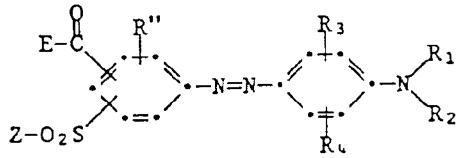 (3)

in which E and Z are as defined in claim 1, R″ is hydrogen or chlorine, $R_1$ and $R_2$ independently of one another are hydrogen or $C_1$-$C_4$alkyl or phenyl, each of which is unsubstituted or substituted by $-OH$, $-OSO_3H$, $-OCOCH_3$, $-CN$ or halogen, and $R_3$ and $R_4$ independently of one another are hydrogen, halogen, $C_1$-$C_4$alkyl, $C_1$-$C_4$alkoxy, trifluoromethyl, $C_1$-$C_4$alkanoylamino or sulfo.

7. A reactive dye according to claim 1, of the formula

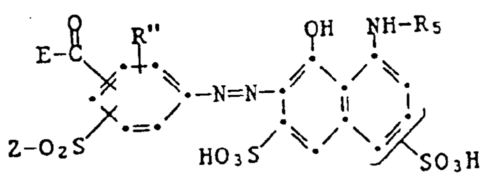 (4)

in which E, Z and R″ are as defined in claim 6 and $R_5$ is $C_1$-$C_4$alkanoyl, benzoyl or a radical of the formula

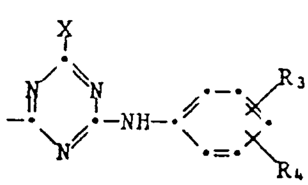 (5)

in which X is chlorine or fluorine and $R_3$ and $R_4$ independently are each as defined in claim 6

8. A reactive dye according to claim 1, of the formula

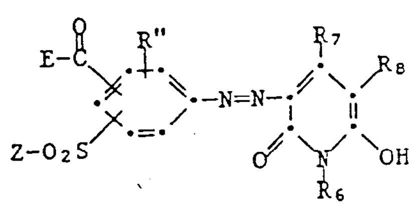 (6)

in which E, Z and R″ are as defined in claim 6, $R_6$ and $R_7$ independently of one another are hydrogen, $C_1$-$C_4$alkyl

or phenyl and $R_8$ is hydrogen, cyano, carbamoyl or sulfomethyl.

9. A reactive dye according to claim 1, of the formula

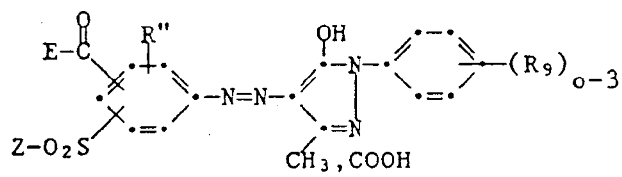

in which E, Z and R″ are as defined in claim 6 and $R_9$ is 0 to 3 identical or different substituents selected from the group comprising chlorine, methyl, methoxy, carboxyl or sulfo.

10. A reactive dye according to claim 1, of the formula

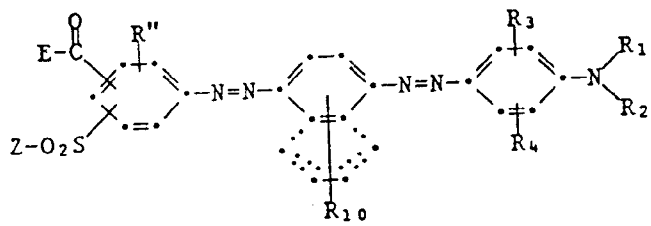

(8)

in which E, Z, R″, $R_1$, $R_2$ $R_3$ and $R_4$ are as defined in claim 6 and $R_{10}$ is $C_1$-$C_4$alkyl, $C_1$-$C_4$alkoxy, halogen or sulfo.

11. A reactive dye according to claim 1, of the formula

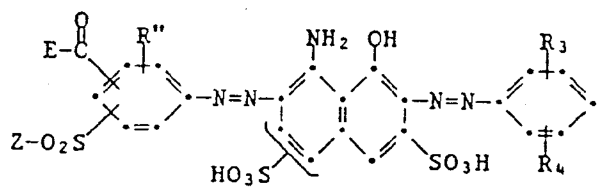

(9)

in which E, Z, R″, $R_3$ and $R_4$ are as defined in claim 6.

12. A process for the preparation of reactive dyes of the formula (2) according to claim 1, which comprises reacting a diazo component of the formula

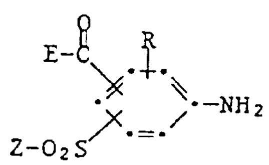

(1c)

in which E, Z and R are as defined in claim 1, or a precursor thereof, with a coupling component of the formula

H-K (10)

in which K is as defined in claim 1, by diazotization and coupling to give reactive dyes of the formula (2), or converting the intermediates obtained into the desired final dyes and optionally subsequently carrying out a further modification reaction.

13. A reactive dye according to either of claims 1 and 2, of the formula (14), wherein p is 0 and B is a direct bond or a $-CH_2-$, -CO- or $-SO_2-$ group.

14. A reactive dye according to claim 13, of the formula

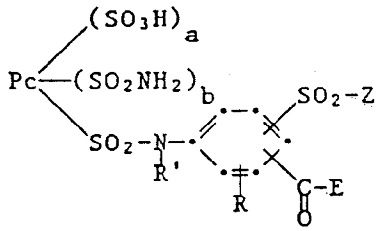 (20)

in which Pc is the radical of a metal-containing or metal-free phthalocyanine nucleus, a and b are integers or fractional numbers from 1 to 3, a and b together being 3.0, and E, R, R′ and Z are as defined in claim 1.

15. A reactive dye according to either of claims 1 and 2, of the formula (14), wherein p is 1 and B is a further reactive radical.

16. A reactive dye according to claim 15, wherein B is a reactive radical of the formula

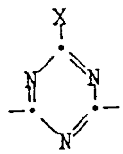 (15b)

in which X is halogen.

17. A reactive dye according to claim 15, of the formula

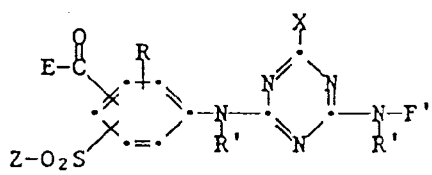 (16)

in which E, Z, R and R′ are as defined in claim 1, X is halogen and F′ is the radical of a monoazo or disazo dye of the formula

$$D\text{-}N{=}N\text{-}(M\text{-}N\text{-}N\text{-})_nK\text{-} \qquad (17a)$$

or of the formula

$$\text{-}D\text{-}N{=}N\text{-}(M\text{-}N{=}N\text{-})_nK \qquad (17b)$$

in which D is the radical of a diazo component of the benzene or naphthalene series, M is a middle component of the benzene or naphthalene series, K is the radical of a coupling component of the benzene or naphthalene series or of the heterocyclic series and n is 0 or 1.

18. A reactive dye according to claim 17, of the formula

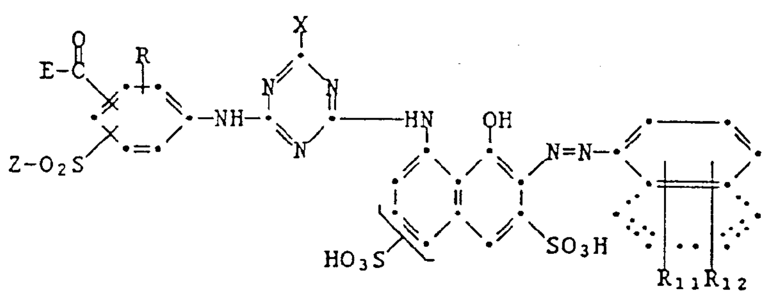 (18)

in which E, Z and R are as defined in claim 1, X is halogen and $R_{11}$ and $R_{12}$ independently of one another are hydrogen, sulfo or nitro.

19. A reactive dye according to claim 15, of the formula

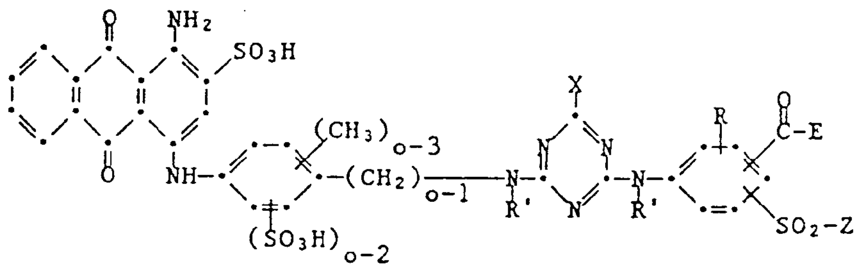 (21)

in which Z, R and R′ are as defined in claim 1 and X is halogen.

20. A reactive dye according to claim 15, of the formula

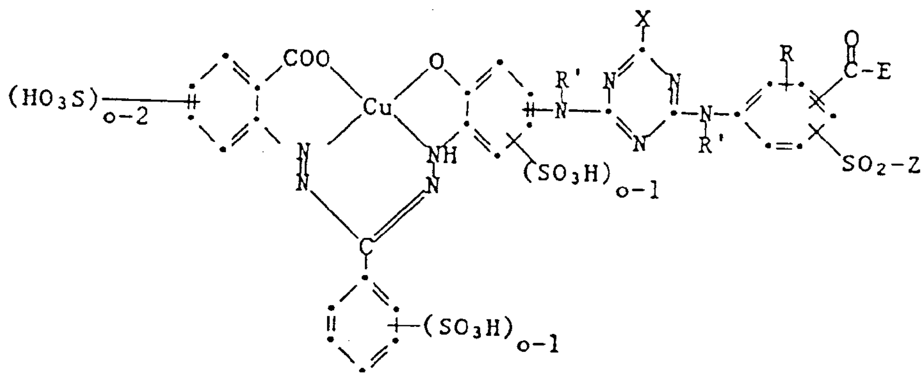 (22),

in which E, R, R′ and Z are as defined in claim 1 and X is halogen.

21. A process for the preparation of a compound of the formula (14) according to claim 1 in which p is 0, which comprises reacting a composed of the formula

F - B - Hal (23)

in which F and B are as defined in claim 1 and Hal is halogen, or dye precursors, with a composed of the formula

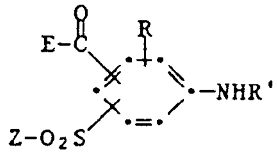 (1),

in which E, R, R′ and Z are each as defined in claim 1

22. A process for the preparation of a composed of the formula (14) according to claim 1 in which p is 1, which comprises first reacting dye of the formula

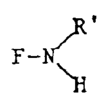 (24)

or dye precursors with a compound of the formula

Hal-B-Hal (25)

to give a composed of the formula

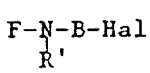 (26)

and subsequently reacting this composed with a compound of the formula (1) according to claim 21 to give the reactive dye of the formula (14), F, B and R′ each being as defined in claim 1 and Hal being halogen.

23. A compound of the formula

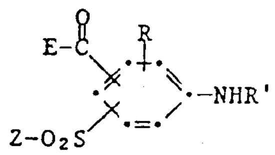

(1)

in which E, Z, R and R′ are as defined in claim 1.

24. A compound according to claim 23, of the formula

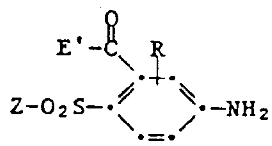

(1a)

in which E′ is a radical of the formula

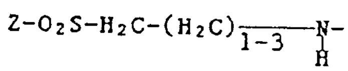

(1a′)

or

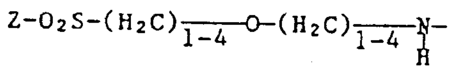

(1b′)

and R and Z are as defined in claim 1.

25. A process for the preparation of a compound of the formula (1) according to claim 23, which comprises reacting a compound of the formula

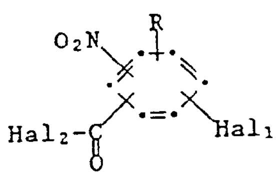

(11)

in which R is as defined in claim 1 and $Hal_1$ and $Hal_2$ independently of one another are halogen, first with an amine of the formula

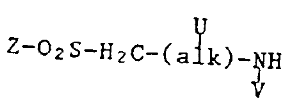

(Ia*),

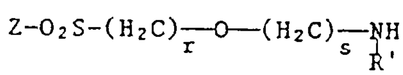

(Ib*),

$Z-O_2S-(alk')-NH-(alk'')-NH_2$ (Ic*)

or

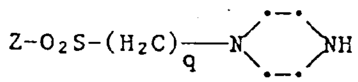

(Id*)

in which Z, U, V, R', alk, alk', alk", r, s, and q are as defined in claim 1, and then with 2-mercaptoethanol, oxidizing the resulting compound to give the disulfonyl composed, reducing the nitro group to the amino group, optionally introducing a detachable group and/or optionally alkylating the amino group.

26. Use of the reactive dyes according to claim 1 for dyeing and printing cellulose-containing fibre materials.

27. Use according to claim 26 for dyeing and printing cotton.

## Revendications

1. Colorants réactifs répondant à la formule :

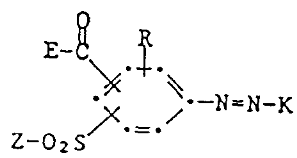

(2)

ou à la formule

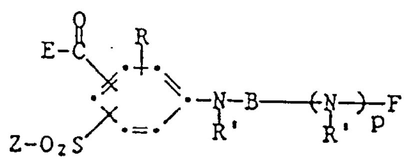

(14)

ainsi que des complexes de métal et de colorants répondant à la formule (2), où R représente un atome d'hydrogène ou d'halogène ou un groupe hydroxy ou sulfo, Z représente un reste répondant à la formule $-CH=CH_2$ ou $-CH_2-CH_2-Y$, Y représente un reste inorganique ou organique pouvant être séparé dans des conditions alcalines, R' représente un atome d'hydrogène ou un groupe alcoyle en $C_1$-$C_4$, non substitué ou substitué par -COOH, -CN, -OH ou $-SO_3H$, E représente un reste répondant à la formule

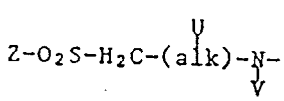

(Ia),

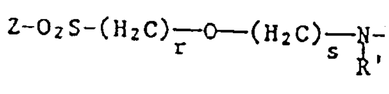

(Ib),

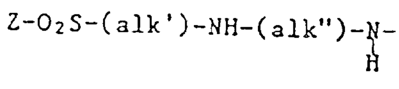

(Ic),

ou

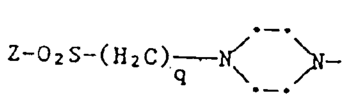

(Id),

dans lesquelles R′ et Z ont les significations indiquées ci-dessus, alk, alk′ et alk″ représentent, indépendamment les uns des autres, un reste alkylène en $C_1$-$C_6$, U représente un atome d'hydrogène ou d'halogène ou un groupe hydroxy, sulfato, alcanoyloxy en $C_1$-$C_4$, cyano, carboxy, (alcoxy en $C_1$-$C_4$)-carbonyle, carbamoyle ou un reste $-SO_2$-Z, où Z a la signification indiquée ci-dessus, V représente un atome d'hydrogène, un groupe alcoyle en $C_1$-$C_4$, éventuellement substitué, ou un reste répondant à la formule

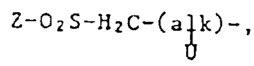

dans laquelle Z, alk et U ont les significations indiquées ci-dessus, et q, r et s représentent, indépendamment les uns des autres, un nombre entier valant de 1 à 6,
K représente le reste d'un composant de copulation de la série du benzène ou du naphtalène ou de la série hétérocyclique,
B représente un chaînon de pontage,
F représente le reste d'un colorant mono- ou disazoïque métallé ou exempt de métal, contenant au moins un groupe $-SO_3H$, le reste d'une 1-amino- ou 1-anilinoanthraquinone, le reste d'un colorant sulfophtalocyanine ou le reste d'un colorant formazan, phénazine, oxazine ou nitroaryle, et p vaut 0 ou 1.

2. Colorants réactifs selon la revendication 1, répondant à la formule

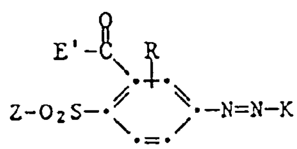

(2a)

ou

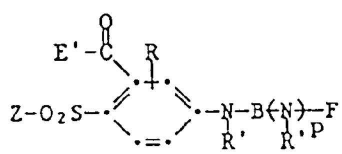

(14a),

dans lesquelles E′ représente un reste répondant à la formule

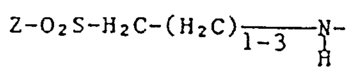

ou

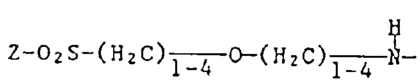

et B, F, K, R, R′, Z et p ont chacun la signification indiquée dans la revendication 1.

3. Colorants réactifs selon la revendication 1 ou 2, répondant à la formule (2) ou (2a), caractérisés en ce que K représente un reste de benzène, naphtalène, naphtylazobenzène, phénylazonaphtalène, pyrazolone, phénylpyrazolone, pyrazole ou pyridone.

4. Colorants réactifs selon l'une des revendications 1 à 3, répondant à la formule (2) ou (2a), caractérisés en ce que K est non substitué, ou substitué par un groupe alcoyle en $C_1$-$C_4$, alcoxy en $C_1$-$C_4$, amino, N-mono- ou N,N-di-(alcoyle en $C_1$-$C_4$)-amino, éventuellement substitué dans le reste alcoyle, phénylamino, alcanoylamino en $C_1$-$C_4$, benzoylamino, (alcoxy en $C_1$-$C_4$)-carbonyle, nitro, cyano, trifluorométhyle, halogéno, hydroxy, carboxy, sulfo, sulfométhyle, sulfamoyle, N-mono- ou N,N-di-(alcoyle en $C_1$-$C_4$)sulfamoyle, carbamoyle et/ou N-mono- ou N,N-di-(alcoyle en $C_1$-$C_4$)-carbamoyle.

5. Colorants réactifs selon l'une des revendications 1 à 4, répondant à la formule (2) ou (2a), caractérisés en ce que K est substitué par un groupe sulfo, par un reste aliphatique sulfaté ou par un reste aliphatique pouvant être sulfaté et, en outre, substitué éventuellement par un ou plusieurs des restes indiqués dans la revendication 4

6. Colorants réactifs selon la revendication 1, répondant à la formule

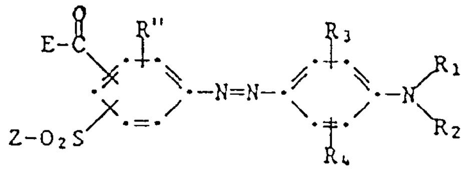

(3)

dans laquelle E et Z ont les significations indiquées dans la revendication 1, R″ représente un atome d'hydrogène ou de chlore, $R_1$ et $R_2$ représentent, indépendamment l'un de l'autre, un atome d'hydrogène ou un groupe alcoyle en $C_1$-$C_4$ ou phényle, non substitué ou substitué par -OH, $-OSO_3H$, $-OCOCH_3$, -CN ou par un halogène, et $R_3$ et $R_4$ représentent, indépendamment l'un de l'autre, un atome d'hydrogène ou d'halogène ou un groupe alcoyle en $C_1$-$C_4$, alcoxy en $C_1$-$C_4$, trifluorométhyle, alcanoylamino en $C_1$-$C_4$ ou sulfo.

7. Colorants réactifs selon la revendication 1, répondant à la formule

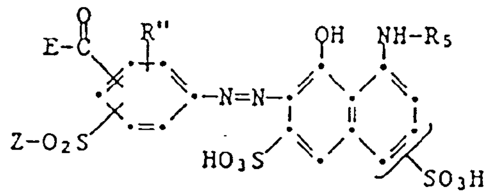

(4)

dans laquelle E, Z et R″ ont les significations indiquées dans la revendication 6 et $R_5$ représente un groupe alcanoyle en $C_1$-$C_4$, benzoyle ou un reste répondant à la formule

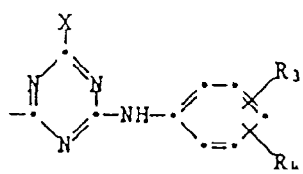

(5)

X représentant un atome de chlore ou de fluor, et $R_3$ et $R_4$ ayant chacun, indépendamment l'un de l'autre, les significations indiquées dans la revendication 6.

8. Colorants réactifs selon la revendication 1, répondant à la formule

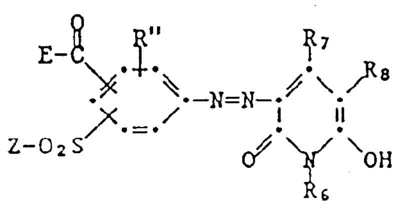

(6)

dans laquelle E, Z et R″ ont les significations indiquées dans la revendication 6, $R_5$ et $R_7$ représentent, indépendamment l'un de l'autre, un atome d'hydrogène ou un groupe alcoyle en $C_1$-$C_4$ ou phényle, et $R_5$ représente un atome d'hydrogène ou un groupe cyano, carbamoyle ou sulfométhyle.

9. Colorants réactifs selon la revendication 1, répondant à la formule

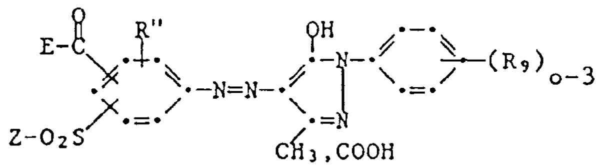

dans laquelle E, Z et R″ ont les significations indiquées dans la revendication 6, et $R_9$ représente 0 à 3 substituants identiques ou différents, choisis dans le groupe comprenant chloro, méthyle, méthoxy, carboxy et sulfo.

10. Colorants réactifs selon la revendication 1, répondant à la formule

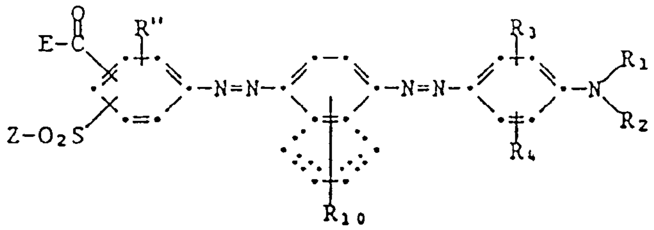

(8)

dans laquelle E, Z, R″, $R_1$, $R_2$, $R_3$ et $R_4$ ont les significations indiquées dans la revendication 6, et $R_{10}$ représente un groupe alcoyle en $C_1$-$C_4$, alcoxy en $C_1$-$C_4$, halogéno ou sulfo.

11. Colorants réactifs selon la revendication 1, répondant à la formule

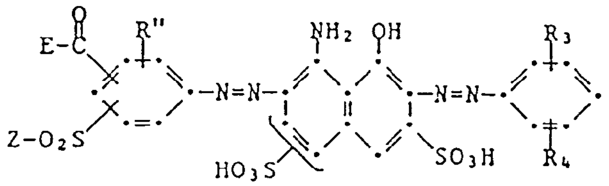

(9)

dans laquelle E, Z, R″, $R_3$ et $R_4$ ont les significations indiquées dans la revendication 6.

12. Procédé de préparation de colorants réactifs de formule (2) selon la revendication 1, caractérisés en ce qu'on fait réagir un composant diazo de formule

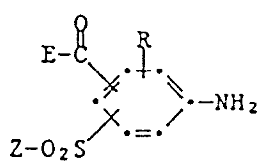

(1c),

E, Z et R ayant les significations indiquées dans la revendication 1, ou son précurseur, avec un composant de copulation de formule

H-K (10)

K ayant la signification indiquée dans la revendication 1, par diazotation et copulation, pour obtenir des colorants réactifs de formule (2), ou on transforme les produits intermédiaires obtenus en les colorants finaux souhaités et on les soumet éventuellement à une autre réaction de transformation subséquente.

13. Colorants réactifs selon la revendication 1 ou 2, répondant à la formule (14), caractérisés en ce que p vaut 0 et B représente une liaison directe ou un groupe $-CH_2-$, -CO- ou $-SO_2-$.

14. Colorants réactifs selon la revendication 13, répondant à la formule

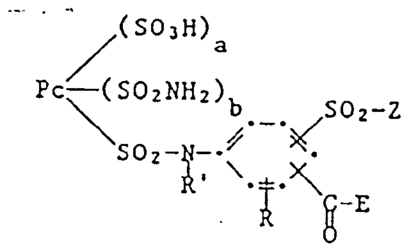

(20)

dans laquelle Pc représente le reste d'un noyau phtalocyanine métallé ou exempt de métal, a et b représentent des nombres entiers ou fractionnaires valant de 1 à 3, la somme de a et b étant 3,0, et E, R, R' et Z ont la signification indiquée dans la revendication 1.

15. Colorants réactifs selon la revendication 1 ou 2, répondant à la formule (14), caractérisés en ce que p vaut 1 et B est un reste réactif supplémentaire.

16. Colorants réactifs selon la revendication 15, caractérisés en ce que B représente un reste réactif répondant à la formule

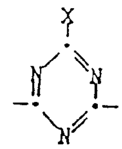

(15b)

dans laquelle X représente un atome d'halogène.

17. Colorants réactifs selon la revendication 15, répondant à la formule

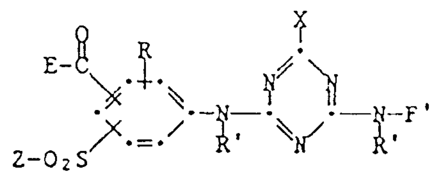

(16)

dans laquelle E, Z, R et R' ont les significations indiquées dans la revendication 1, X représente un atome d'halogène et F' représente le reste d'un colorant mono- ou disazoïque répondant à la formule

D-N=N-(M-N=N-)$_n$K- (17a)

ou à la formule

-D-N=N-(M-N=N-)$_n$K (17b)

dans lesquelles D représente le reste d'un composant diazo de la série du benzène ou du naphtalène, M représente un composant intermédiaire de la série du benzène ou du naphtalène, K représente le reste d'un composant de copulation de la série du benzène ou du naphtalène ou de la série hétérocyclique, et n vaut 0 ou 1.

18. Colorants réactifs selon la revendication 17, répondant à la formule

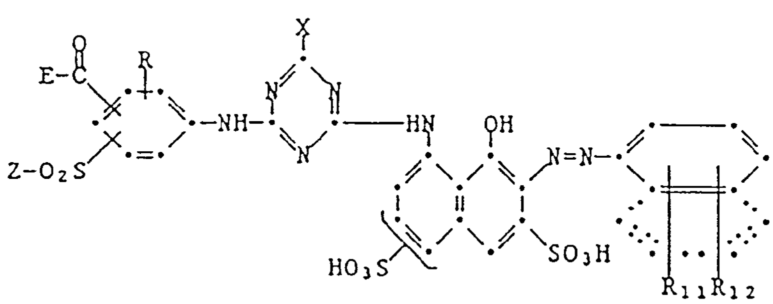

(18)

dans laquelle E, Z et R ont les significations indiquées dans la revendication 1, X représente un atome d'halogène, et $R_{11}$ et $R_{12}$ représentent, indépendamment l'un de l'autre, un atome d'hydrogène ou un groupe sulfo ou nitro.

19. Colorants réactifs selon la revendication 15, répondant à la formule

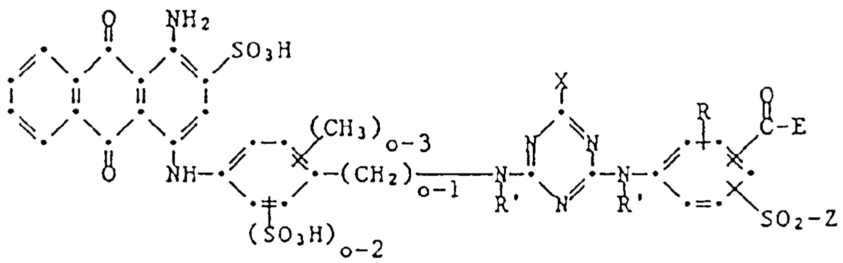

(21)

dans laquelle Z, R et R′ ont les significations indiquées dans la revendication 1 et X représente un atome d'halogène.

20. Colorants réactifs selon la revendication 15, répondant à la formule

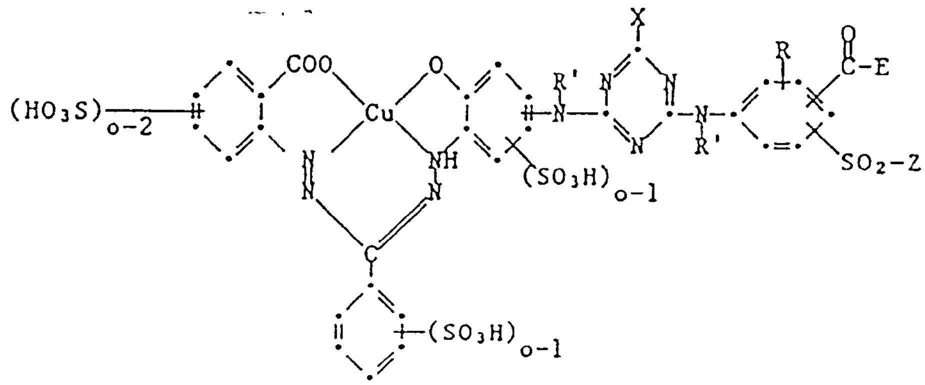

(22)

dans laquelle E, R, R′ et Z ont les significations indiquées dans la revendication 1 et X représente un atome d'halogène.

21. Procédé de préparation de composés de formule (14) selon la revendication 1, dans laquelle p vaut 0, caractérisés en ce qu'on fait réagir un composé de formule

F - B - Hal (23)

dans laquelle F et B ont les significations indiquées dans la revendication 1 et Hal représente un atome d'halogène, ou des précurseurs de colorant, avec un composé de formule

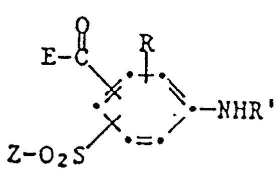

(1)

dans laquelle E, R, R′ et Z ont chacun la signification indiquée dans la revendication 1.

22. Procédé de préparation de composés de formule (14) selon la revendication 1, dans laquelle p vaut 1, caractérisés en ce qu'on fait réagir un colorant de formule

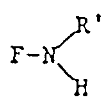

(24)

ou des précurseurs de colorant, d'abord avec un composé de formule

Hal-B-Hal- (25)

pour obtenir le composé de formule

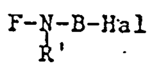

(26)

et après cela, on fait réagir ce composé avec un composé de formule (1) selon la revendication 21 pour obtenir le colorant réactif de formule (14), F, B et R′ ayant chacun la signification indiquée dans la revendication 1, et Hal représentant un atome d'halogène.

23. Composés répondant à la formule

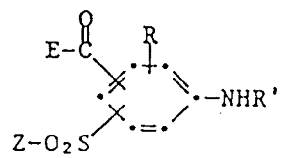

(1)

dans laquelle E, Z, R et R′ ont les significations indiquées dans la revendication 1.

24. Composés selon la revendication 23, répondant à la formule

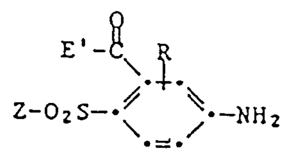

(1a)

dans laquelle E′ représente un reste répondant à la formule

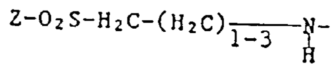

(Ia')

ou

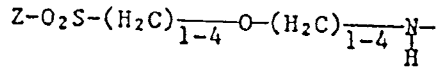

(Ib')

et R et Z ont les significations indiquées dans la revendication 1.

25. Procédé de préparation de composés de formule (1) selon la revendication 23, caractérisé en ce qu'on fait réagir un composé de formule

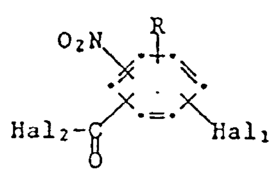

(11)

dans laquelle R a la signification indiquée dans la revendication 1, et $Hal_1$ et $Hal_2$ représentent, indépendamment l'un de l'autre, un atome d'halogène, d'abord avec une amine de formule

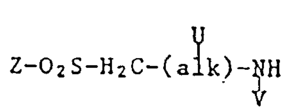

(Ia*),

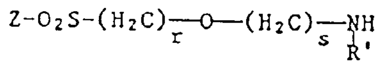 (Ib*),

$Z\text{-}O_2S\text{-}(alk')\text{-}NH\text{-}(alk'')\text{-}NH_2$ (Ic*)

ou

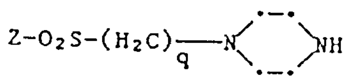 (Id*),

Z, U, V, R′, alk, alk′, alk″, r, s et q ayant les significations indiquées dans la revendication 1, et ensuite avec du 2-mercaptoéthanol, on oxyde le composé obtenu en composé disulfonyle, on réduit le groupe nitro en groupe amino, éventuellement on introduit un groupe séparable et/ou éventuellement on alcoyle le groupe amino.

26. Utilisation des colorants réactifs selon la revendication 1 pour teindre et imprimer des matières fibreuses contenant de la cellulose.

27. Utilisation selon la revendication 26 pour teindre et imprimer du coton.